(19)

Europäisches
Patentamt
European
Patent Office
Office européen
des brevets

(11) **EP 4 421 966 A1**

(12) **EUROPEAN PATENT APPLICATION**
published in accordance with Art. 153(4) EPC

(43) Date of publication:
**28.08.2024 Bulletin 2024/35**

(21) Application number: **22882947.9**

(22) Date of filing: **20.10.2022**

(51) International Patent Classification (IPC):
**H01M 50/409** (2021.01)    **H01M 50/446** (2021.01)
**C08J 7/04** (2020.01)    **C08L 23/06** (2006.01)

(52) Cooperative Patent Classification (CPC):
**C08J 7/04; C08L 23/06; H01M 50/409;
H01M 50/446; Y02E 60/10**

(86) International application number:
**PCT/CN2022/126445**

(87) International publication number:
**WO 2023/066342 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2021  CN 202111229530
21.12.2021  CN 202111572973
11.02.2022  CN 202210129640**

(71) Applicant: **Beijing Yucheng Technology Co., Ltd.
Beijing 101407 (CN)**

(72) Inventors:
• **QI, Shengli**
  **Beijing 101407 (CN)**
• **DONG, Nanxi**
  **Beijing 101407 (CN)**
• **JIA, Nanfang**
  **Beijing 101407 (CN)**
• **WANG, Jie**
  **Beijing 101407 (CN)**

(74) Representative: **Seemann & Partner
Patentanwälte mbB
Raboisen 6
20095 Hamburg (DE)**

(54) **MODIFIED COMPOSITE SEPARATOR AND PREPARATION METHOD THEREFOR**

(57)    The present invention relates to the technical field of battery separators and provides a coated modified composite separator, a preparation method thereof and a coating slurry for preparing the composite separator. The coated modified composite separator includes a base membrane and a coating, wherein the coating is coated on either any one side or both sides of the base membrane, and the coating comprises at least two of the following: b2.1 high temperature resistant polymer microspheres, b2.2 high temperature resistant polymer nanofibers, and b2.3 inorganic particles. The coating in the modified composite separator of the present invention notably enhances the thermal dimensional stability of the base membrane, decreases the areal density of the composite separator, boosts the battery's energy density, lowers the probability of occurrence of thermal runaway, and improves battery safety.

Figure 2

EP 4 421 966 A1

**Description**

Technical Field

The present invention relates to the technical field of battery separators, and in particular to a modified composite separator and a preparation method thereof.

Backgrounds

Lithium-ion battery is a new type of green secondary battery that was successfully developed and commercialized in 1990. Compared with traditional lead-acid batteries, cadmium-nickel batteries and the like, lithium-ion batteries have the advantages of high energy density, high working voltage, long cycle life, small size, no memory effect, fast charging and discharging, and environmental protection. Lithium-ion batteries have been widely used in 3C products such as mobile phones, laptop computers and electrical tools, and have become the main developing direction of secondary batteries at current stage. In recent years, with the implementation of new energy strategies around the world, high-energy-density lithium-ion battery has been developed more rapidly, wherein its energy density has been increased to the level of 300Wh/kg, and its applications have been extended rapidly from traditional small 3C electronic field to large power equipment field such as new energy electric vehicles, energy storage, large unmanned aerial vehicles, ships, pure electric aircrafts and the like. The rapid development of 3C products and large power equipments, especially new energy electric vehicles, also has put forward higher requirements for the specific capacity, safety and the like of lithium-ion batteries.

Lithium-ion batteries are mainly composed of positive/negative electrode materials, electrolyte and separator. The separator is an important part of a lithium-ion battery which separates the positive electrode from the negative electrode, prevents short-circuiting of the battery, and allows lithium ions to pass through freely. The separator plays an important role in improving the overall performance of the battery and is known as the "third electrode" of the battery in the battery industry. Although the separator does not participate in the battery reaction, its structure and performance have an important influence on the manufacturing, performance, service life, reliability and safety of the battery. Traditional lithium-ion battery separators generally use polyolefin materials represented by polyethylene and polypropylene, which are prepared through wet, dry uniaxil stretching, dry diaxil stretching and other processes and have good tensile properties, pore size distribution and the like. Currently, traditional polyolefin microporous separators are commonly used as separators for lithium-ion batteries due to their excellent chemical stability, thickness, and mechanical strength. However, these separators undergo severe thermal shrinkage at a higher temperature. This problem is fatal to the safety of battery because it may lead to the contacting of positive and negative electrodes inside battery and therefor short circuit, and eventually lead to fire or even explosion. Moreover, the polarity of the separator is completely differnent from that of the electrolyte. The separator is a non-polar material and the electrolyte is polar, making it difficult for the separator to be wetted by the electrolyte, resulting in poor wettability of the separator. The inadequate wettability and low porosity of the separator will significantly hinder the conductivity of lithium ions, consequently affecting the overall performance of lithium-ion batteries. These problems of polyolefin-based separators have become critical obstacles in the development of safe, high-power lithium-ion batteries.

Therefore, the development of a new separator material with high temperature resistance and good wettability has become a key issue that the lithium battery industry urgently needs to solve and one of the most important research directions, particularly for the development of large-capacity and high-energy-density lithium-ion batteries.

In view of above situation, the current modification methods mainly include blending modification, composite modification, coating modification, ion modification and other modification methods. Surface coating is one of the most important and commonly used methods. The surface of the polyolefin membrane is usually coated with ceramic coatings, such as aluminum oxide ($Al_2O_3$), silicon dioxide ($SiO_2$), titanium dioxide ($TiO_2$), etc. The coating can significantly improve the wettability of the separator by the electrolyte and temperature resistance of the separator. However, ceramic-coated modified polyolefin separators continue to face several challenges. For example, inorganic ceramics have poor compatibility with the substrate, and the ceramic coating is easy to peel off. In addition, the density of the ceramic layer adds weight, and the insulating property of ceramic is poor and accordingly the dielectric property is insufficient, especially when the base membrane thins or melts. Another problem is that the inorganic coating is a powdery agglomeration structure of particles, which itself cannot form a continuous self-supporting structure. Therefore, inorganic coating usually shows problems of easy powder loss and coating peeling during usage. More importantly, the inorganic particle layer of the inorganic coated separator at high temperature will generally pulverize and break, leading to separator breakdown. It cannot suppress the occurrence of thermal runaway and cannot meet the requirements of high heat resistance and high thermal dimensional stability of the separator in lithium-ion batteries.

Considering the aforementioned challenges, there are more and more studies on using high temperature resistant polymers as coating materials, and commonly used polymers include PVDF, PMMA, PEI, etc. For example, patent CN104993089 reports an aramid-coated lithium-ion battery separator and its preparation method. According to the patent, an aramid solution, an emulsifier solution, and a binder are mixed uniformly to obtain an aramid slurry, and then the resulting polymer colloidal fluid is coated onto the surface of the polyolefin separator. The thermal dimensional stability of the separator is improved to a certain extent and the safety and reliability of lithium-ion batteries are improved. However, the organic polymer in this method has an insufficient temperature resistance and the improvement of thermal dimensional stability is insufficient.

In view of the above shortcomings, it is necessary to innovate existing coatings and develop new coating technologies to solve the problem of pulverizing and breaking of the inorganic particle coating at high temperature, thereby improving the temperature resistance of the separator and preparing new separator materials with heat resistance and high thermal dimensional stability, so as to meet the urgent needs of high-energy-density lithium-ion batteries for high-temperature-resistant separators and high safety.

Contents of the invention

The present invention provides a modified composite separator, wherein the coated modified composite separator includes a base membrane and a coating, wherein the coating is coated on either one side or both sides of the base membrane, and the coating comprises at least two types of the three following components: high temperature resistant polymer microspheres, high temperature resistant polymer nanofibers and inorganic particles. Upon the incorporation of the high temperature resistant polymer into the coating, the separator shows good thermal protection effect and high temperature thermal dimensional stability because the polymer is an organic substance and is more intimately combined with the binder and the like, and at the same time, the high temperature resistant polymer has a lower density, and can increase the liquid retention rate of the separator and can improve the cycle performance and temperature resistance of the battery.

The base membrane is a polymer base membrane or a polymer base membrane coated with inorganic particles. The particle size of the high temperature resistant polymer microspheres is 3-20000 nm, preferably 5-18000 nm, more preferably 8-15000 nm; more preferably, the particle size of the high temperature resistant polymer microspheres is 3-5000 nm, preferably 5-3000 nm, more preferably 8-2000 nm. The diameter of the high temperature resistant polymer nanofibers is 5-1500 nm, preferably 6-1450 nm, and more preferably 8-1350 nm. The length of the high temperature resistant polymer nanofibers is 0.5-1000 $\mu$m, preferably 0.6-950 $\mu$m, and more preferably 1.0-900 $\mu$m. The thickness of the base membrane is 1.5-40 $\mu$m, preferably 2.0-35 $\mu$m, more preferably 3.5-30 $\mu$m. The thickness of the coating is 0.2-10 $\mu$m, preferably 0.3-9 $\mu$m, more preferably 0.5-8 $\mu$m. The total thickness of the modified composite separator is 2.0-45 $\mu$m, preferably 2.5-40 $\mu$m, and most preferably 3-36 $\mu$m.

The present invention also provides a method for preparing a coated modified composite separator, including the following steps:

(1) formulating a coating slurry, which comprises at least two of the following:

high temperature resistant polymer microspheres,
high temperature resistant polymer nanofibers, and
inorganic particles;

(2) coating either one side or both sides of the base membrane with the coating slurry.

In one aspect, the present invention also provides a coating slurry comprising a slurry solvent and at least two of the following: high temperature resistant polymer microspheres, high temperature resistant polymer nanofibers and inorganic particles. The coating slurry is used to prepare a coated modified composite separator through a coating method.

In one aspect, the present invention also provides a lithium ion battery, characterized in that the lithium ion battery includes a positive electrode, a negative electrode, an electrolyte and a coated modified composite separator.

The coated modified composite separator and its preparation method of the present invention have one, more or even all of the following beneficial effects:
The present invention provides a high temperature resistant polymer coated modified composite separator, wherein the coating of the modified composite separator is made of high temperature resistant polymer microspheres, high temperature resistant polymer microspheres and high temperature resistant polymer nanofibers, or high temperature resistant polymer microspheres or high temperature resistant polymer nanofibers and inorganic particles. The high temperature resistant polymer provides good thermal protection effect for the separator due to its good adhesion with binder and the like, and can significantly improve the temperature resistance property of the separator and safety property of the battery.

The density of high temperature resistant polymer is significantly lower than that of inorganic particles, which greatly reduces the weight of the coating and the weight per unit area of the separator and which is beneficial to increase the energy density of the battery.

The modified composite separator prepared in the present invention has higher electrolyte absorption rate and liquid retention rate because the high temperature resistant polymer and the electrolyte are both organic substances with polar structures, which can improve the rate capability and cycle life of the battery.

The coating technology provided by the present invention can be applied on any substrate separator to achieve coating formation, and has a wide range of applications. The forming process is simple and can be achieved through any one of electrostatic spraying, blade coating, extrusion coating, transfer coating, dip coating, wire rod coating, gravure or micro-gravure coating, which is easy to conduct in an industrial scale and has a great industrialization prospect.

The present invention prepares high temperature resistant polymer with fiber/microsphere composite morphology by using template method, spray drying technology, electrospinning technology, blowing spinning technology or blowing-assisted electrospinning. The preparation process is simple and efficient.

The incorporation of high temperature resistant polymer nanofibers can form a network structure, increase the integrity of the coating, and avoid the pulverizing problem of pure microsphere structure caused by binder failure at high temperature.

The high temperature-resistant polymer can enhance the thermal stability of polyolefin separators. Moreover, at high temperatures, polyolefins undergo thermal melting, effectively achieving thermal sealing/thermally pore closure, greatly enhancing the safety of the battery.

In the case where the coating of the modified composite separator is formed by mixing high temperature resistant polymer nanofibers and inorganic particles, a "rebar-concrete" structure is formed after the mixing of high temperature resistant polymer nanofibers and ceramics, and the nanofibers form a network such that the mixed coating as a whole has continuous self-supporting characteristic and thus the inorganic coating can maintain a good integrity without braking and pulverizing even the base membrane melts at high temperature, and showing an excellent thermal protection effect. It solves the problem of pulverizing and breaking of a pure inorganic particle coating at high temperature, which can significantly improve the temperature resistance of the separator and battery safety.

In the case where the modified composite separator has high temperature resistant polymer nanofibers, the high-temperature thermal dimensional stability is significantly improved, the overall strength of the mixed coating is significantly increased by the incorproation of high temperature resistant polymer nanofibers, and at the same time, the weight of the coating and the weight of the separator per unit area is reduced greatly since the density of the high temperature resistant polymer nanofibers is significantly lower than that of inorganic particles. The modified composite separator has the characteristic of light weight, facilitating the improvement of the energy density of the battery.

In the case where the modified composite separator has high temperature resistant polymer nanofibers, the separator has higher electrolyte absorption rate and electrolyte retention rate because the high temperature resistant polymer nanofibers forms a network structure in the mixed coating, which can improve the rate capability and cycle life of the battery.

Description of the Figures

Figure 1 is a scanning electron microscope image of a polyimide with fiber/microsphere composite morphology prepared according to Example 1.1, with a magnification of 5000 times.

Figure 2 is a scanning electron microscope image of a polyolefin composite separator modified by coating with polyimide prepared according to Example 1.1, with a magnification of 2000 times.

Figure 3 is a scanning electron microscope image of a polyimide with fiber/microsphere composite morphology prepared according to Example 1.2, with a magnification of 5000 times.

Figure 4 is a scanning electron microscope image of a polyolefin composite separator modified by coating with polyimide prepared according to Example 1.2, with a magnification of 2000 times.

Figure 5 is a scanning electron microscope image of a polyimide with fiber/microsphere composite morphology prepared according to Example 1.3, with a magnification of 5000 times.

Figure 6 is a scanning electron microscope image of a polyolefin composite separator modified by coating with polyimide prepared according to Example 1.3, with a magnification of 2000 times.

Figure 7 is thermal shrinkage comparison pictures of a polyolefin composite separator at different temperatures, wherein the polyolefin composite separator is modified by coating with polyimide prepared according to Example 1.3.

Figure 8 is a scanning electron microscope image of a 7+4CP+4CP modified composite separator provided in Example 2.1 of the present invention.

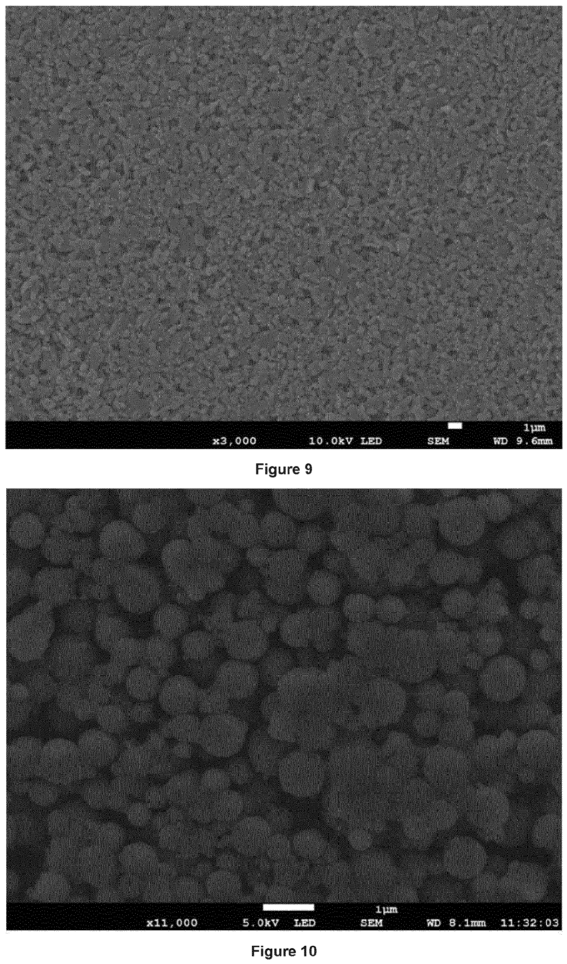

Figure 9 is a scanning electron microscope image of a 7+4C+4C modified composite separator provided in Example 2.1 of the present invention.

Figure 10 is a scanning electron microscope image of the modified composite separator provided in Example 2.15 of the present invention.

Figure 11 is a scanning electron microscope image of the modified composite separator provided in Example 3.1 of the present invention.

Figure 12 is a scanning electron microscope image of the modified composite separator provided in Example 3.2 of the present invention.

Figure 13 is a scanning electron microscope image of the modified composite separator provided in Example 3.3 of the present invention.

Figure 14 is a scanning electron microscope image of the modified composite separator provided in Example 3.4 of the present invention.

Figure 15 is a scanning electron microscope image of the modified composite separator provided in Example 3.5 of the present invention.

Figure 16 is a scanning electron microscope image of the modified composite separator provided in Example 4.1 of the present invention.

Detailed description

Specific embodiments of the present invention will be described in detail below. It should be understood that the specific embodiments described here are only used to illustrate and explain the present invention, and are not intended to limit the present invention.

1. A coated modified composite separator, characterized in that,

the coated modified composite separator includes a base membrane and a coating,
the coating is coated on either any one side or both sides of the base membrane,
the coating comprises at least two of:

b2.1 high temperature resistant polymer microspheres,
b2.2 high temperature resistant polymer nanofibers, and
b2.3 inorganic particles.

2. The coated modified composite separator according to embodiment 1, characterized in that the high temperature resistant polymer includes polyimide.

3. The coated modified composite separator according to embodiment 1, characterized in that the particle size of the high temperature resistant polymer microspheres is 3-20000 nm, preferably 5-18000 nm, more preferably 8-15000 nm; more preferably, the particle size of the high temperature resistant polymer microspheres is 3-5000 nm, preferably 5-3000 nm, and more preferably 8-2000 nm.

4. The coated modified composite separator according to embodiment 1, characterized in that the thickness of the base membrane is 1.5-40 $\mu$m, preferably 2.0-35 $\mu$m, and more preferably 3.5-30 $\mu$m.

5. The coated modified composite separator according to embodiment 1, characterized in that the total thickness of the modified composite separator is 2.0-45 $\mu$m, preferably 2.5-40 $\mu$m, and most preferably 3-36 $\mu$m.

6. The coated modified composite separator according to embodiment 1, characterized in that the thickness of the coating is 0.2-10 $\mu$m, preferably 0.3-9 $\mu$m, and more preferably 0.5-8 $\mu$m.

7. The coated modified composite separator according to embodiment 1 or 2, characterized in that the base membrane is a polyolefin base membrane or a polyolefin base membrane coated with inorganic particles.

8. The coated modified composite separator according to embodiment 2, characterized in that the coating comprises polyimide nanofibers/polyimide microspheres.

9. The coated modified composite separator according to embodiment 7, characterized in that the thickness of the polyolefin base membrane coated with inorganic particles is 3-40 $\mu$m.

10. The coated modified composite separator according to embodiment 8, characterized in that the diameter of the polyimide nanofibers in the polyimide coating is 20-1000 nm.

11. The coated modified composite separator according to embodiment 1, characterized in that the coating comprises high temperature resistant polymer microspheres and inorganic particles, and the weight ratio of the high temperature resistant polymer microspheres to the inorganic particles is 0.1-100:99.9-0, preferably 0.1-99.9:99.9-0.1.

12. The coated modified composite separator according to embodiment 11, characterized in that the weight ratio of high temperature resistant polymer microspheres to inorganic particles in the coating is 1-100:99-0, preferably 5-100:95-0, most preferably 30-100:70-0, and even more preferably, the weight ratio of high temperature resistant polymer microspheres to inorganic particles in the coating is 1-99.9:99-0.1, preferably 5-99.9:95-0.1, most preferably 30-99.9:70-0.1.

13. The coated modified composite separator of embodiment 11, wherein the base membrane is at least one of a polymer base membrane and an base membrane coated with inorganic particles;
preferably, the polymer base membrane includes at least one of a polyolefin base membrane, a cellulose base membrane, a polyester base membrane, an aramid base membrane, a polyimide base membrane, and an organic-inorganic hybrid base membrane.

14. The coated modified composite separator according to embodiment 13, characterized in that the polymer base membrane includes a single-layer membrane, a double-layer membrane or a multi-layer membrane, and the polymer base membrane contained in each layer are the same or different.

15. The coated modified composite separator according to any one of embodiments 11 to 14, characterized in that the high temperature resistant polymer microspheres include at least one of the followsing: unmodified high temperature resistant polymer microspheres, surface modified high temperature resistant polymer microspheres, and inorganic hybrid high temperature resistant polymer microspheres.

16. The coated modified composite separator according to embodiment 15, characterized in that the polymers in the unmodified high temperature resistant polymer microspheres, surface modified high temperature resistant polymer microspheres, and inorganic hybridhigh temperature resistant polymer microspheres include at least one of: P84, polyetherimide, polyphosphazene, polyacrylonitrile, polystyrene, polyvinylidene fluoride, polyvinylidene fluoride copolymer, polyvinylidene fluoride-hexafluoropropylene, polymethyl methacrylate, polytetrafluoroethylene, polyimide, polyester, cellulose, polyether ether ketone, polyaryl ether, polyamide, and polybenzimidazole.

17. The coated modified composite separator according to embodiment 16, characterized in that the surface modified high temperature resistant polymer microspheres include at least one of inorganic surface-modified high temperature resistant polymer microspheres, high temperature resistant polymer microspheres with polar groups after surface treating, or high temperature resistant polymer microspheres surface-coated with a functionalized polymer layer containing polar groups.

18. The coated modified composite separator according to embodiment 15, characterized in that the inorganic hybrid high temperature resistant polymer microspheres include at least one of polyimide/silica microspheres, polyimide/titanium dioxide microspheres, polyimide/zirconia microspheres, polyimide/zinc oxide microspheres, polyimide/magnesium oxide microspheres, polyimide/magnesium hydroxide microspheres, polyimide/boehmite microspheres.

19. The coated modified composite separator according to any one of embodiments 10 to 13, characterized in that the inorganic particles in the coating include at least one of ceramics, metal oxides, metal hydroxides, metal carbonates, silicates, kaolin, talc, minerals, and glass; preferably at least one of boehmite, alumina, silica, barium titanate, titanium dioxide, zinc oxide, magnesium oxide, magnesium hydroxide, zirconia or an oxide solid electrolyte;

preferably, the oxide solid electrolyte includes at least one of perovskite type, NASICON type, LISICON type, garnet type and LiPON type electrolyte;
preferably, the average particle size of the inorganic particles is 3 nm-5 $\mu$m, preferably 7 nm-4.9 $\mu$m, and most preferably 10 nm-4.5 $\mu$m.

20. The coated modified composite separator according to any one of embodiments 11 to 14, characterized in that the coating further comprises at least one of a binder, a surfactant, a dispersant, a wetting agent, and a defoaming agent;
the amount of the binder is 0.3-10.5 parts by weight; the amount of the surfactant is 0.05-7 parts by weight; the amount of the dispersant is 0.05-9 parts by weight; the amount of the wetting agent is 0.02-7 parts by weight; the amount of the defoaming agent is 0.04-4 parts by weight.

21. The coated modified composite separator according to embodiment 1, characterized in that the coating comprises high temperature resistant polymer nanofibers and inorganic particles, and the weight ratio of the high temperature resistant polymer nanofibers to inorganic particles is (0.4-65): (99.6-35).

22. The coated modified composite separator according to embodiment 21, wherein the weight ratio of high temperature resistant polymer nanofibers to inorganic particles in the coating is (1-64):(99-36), preferably (3-62):(97-38), most preferably (5-59):(95-41).

23. The coated modified composite separator according to either one of embodiments 21 to 22, wherein the base membrane is at least one of a polymer base membrane and a base membrane coated with inorganic particles;
preferably, the polymer base membrane includes at least one of a polyolefin base membrane, a cellulose base membrane, a polyester base membrane, and an aramid base membrane.

24. The coated modified composite separator according to any one of embodiments 21 to 23, the polymer base membrane includes a single-layer membrane, a double-layer membrane or a multi-layer membrane, and the polymer base membrane contained in each layer are the same or different.

25. The coated modified composite separator according to any one of embodiments 21 to 24, wherein the high temperature resistant polymer nanofibers include at least one of the following: unmodified high temperature resistant polymer nanofibers, surface modified high temperature resistant polymer nanofibers, and inorganic hybrid high temperature resistant polymer nanofibers.

26. The coated modified composite separator according to any one of embodiments 21 to 25, wherein the diameter of the high temperature resistant polymer nanofibers is 5-1500 nm, preferably 6-1450 nm, and more preferably 8-1350 nm; and / or
the length of the high temperature resistant polymer nanofibers is 0.5-1000 $\mu$m, preferably 0.6-950 $\mu$m, and more preferably 1.0-900 $\mu$m.

27. The coated modified composite separator according to any one of embodiments 21 to 26, wherein the unmodified high temperature resistant polymer nanofibers and the high temperature-resistant polymer nanofibers used for surface modification and inorganic hybridization include at least one of: P84 nanofibers, polyetherimide nanofibers, polyvinylidene fluoride and its copolymer nanofibers, polyvinylidene fluoride-hexafluoropropylene nanofibers, polytetrafluoroethylene nanofibers, polyphosphazene nanofibers, polyacrylonitrile nanofibers, polyimide nanofibers, polyester nanofibers, cellulose nanofibers, polyether ether ketone nanofibers, polyaryl ether nanofibers, polyamide nanofibers, and polybenzimidazole nanofibers.

28. The coated modified composite separator according to any one of embodiments 21 to 27, wherein the surface modified high temperature resistant polymer nanofibers include at least one of inorganic surface-modified high temperature resistant polymer nanofibers, high temperature resistant polymer nanofibers with polar groups after surface treating, or high temperature resistant polymer nanofibers surface-coated with a functionalized polymer layer containing polar groups.

29. The coated modified composite separator according to any one of embodiments 21 to 28, characterized in that the inorganic particles in the coating include at least one of ceramics, metal oxides, metal hydroxides, metal carbonates, silicates, kaolin, talc, minerals, and glass; preferably at least one of boehmite, alumina, silica, barium titanate, titanium dioxide, zinc oxide, magnesium oxide, magnesium hydroxide, zirconia or an oxide solid electrolyte;

preferably, the oxide solid electrolyte includes at least one of perovskite type, NASICON type, LISICON type, garnet type and LiPON type electrolyte;
preferably, the average particle size of the inorganic particles is 10 nm-5 $\mu$m, preferably 11 nm-4.9 $\mu$m, and most preferably 15 nm-4.5 $\mu$m.

30. The coated modified composite separator according to any one of embodiments 21 to 29, wherein the coating further comprises at least one of a binder, a surfactant, a dispersant, a wetting agent, and a defoaming agent.

31. The coated modified composite separator according to any one of embodiments 21 to 30, wherein the amount of the binder is 0.5-12.5 parts by weight, preferably 0.6-12 parts by weight, more preferably 1.0-9 parts by weight; and/or

the amout of the surfactant is 0.1-5 parts by weight, preferably 0.2-4.9 parts by weight, more preferably 0.4-4.7 parts by weight; and/or
the amout of the dispersant is 0.1-7 parts by weight, preferably 0.2-6.9 parts by weight, more preferably 0.4-6.4 parts by weight; and/or
the amout of the wetting agent is 0.05-5 parts by weight, preferably 0.06-4.9 parts by weight, more preferably 0.09-4.7 parts by weight; and/or
the amout of the defoaming agent is 0.1-4 parts by weight, preferably 0.2-3.9 parts by weight, and more preferably 0.4-3.5 parts by weight.

32. A preparation method of the coated modified composite separator according to any one of embodiments 21 to 30, characterized in that it includes the following steps:

(1) formulating a coating slurry, which comprises at least two of the following:

b2.1 high temperature resistant polymer microspheres,
b2.2 high temperature resistant polymer nanofibers, and
b2.3 inorganic particles;

(2) coating either one side or both sides of the base membrane with the coating slurry.

33. The preparation method according to embodiment 32, the coating slurry comprises high temperature resistant polymer microspheres and high temperature resistant polymer nanofibers, wherein the high temperature resistant polymer is polyimide, the method includes the following steps:

A: preparing a polyamic acid solution by low-temperature condensation polymerization in a polar aprotic solvent using a dianhydride and a diamine as monomers with intrinsic viscosity being controlled at 0.01-1dl/g; and preparing a polyamic acid material with nanofiber/microsphere composite morphology by using template method, spray drying technology, electrospinning technology, blowing spinning technology or blowing-assisted electrospinning, adjusting spinning parameters when necessary;
B: subjecting the polyamic acid material prepared in step A to high-temperature heating treatment, to thermally imidize the polyamic acid material into a polyimide material;
C: formulating a coating slurry: dispersing the polyimide material prepared in step B into a dispersion liquid, for example, ultrasonically dispersed into the dispersion liquid, and stirring evenly, for example, dispersed evenly in a homogenizer; adding a binder, such as a polymer binder, into the polyimide dispersion liquid and stirring evenly, for example, stirring evenly in a homogenizer, with a stirring rate of 500-30000rpm;
D: applying evenly the coating slurry obtained in step C on the surface of the base membrane;
E: drying the composite separator obtained through the treatment of step D, wherein the drying temperature is 50-100°C, and the drying time is 0.1min-12h, or 2min-12h.

34. The preparation method according to embodiment 33, characterized in that, for the polyamic acid solution used in step A, the dianhydride is one or a mixture of two or more of pyromellitic dianhydride (PMDA), 3,3',4,4'-biphenyltetracarboxylic dianhydride (BPDA), 2,3,3',4'-biphenyltetracarboxylic dianhydride ($\alpha$-BPDA), 4,4'-diphenyl ether dianhydride (ODPA), 3,3',4,4'-benzophenone tetracarboxylic acid dianhydride (BTDA), hexafluorodianhydride (6FDA), bisphenol A diether dianhydride (BPADA), 3,3,4,4-diphenyl sulfone tetracarboxylic dianhydrides (DSDA), the diamine is one or a mixture of two or more of 4,4'-diaminodiphenyl ether (ODA), p-phenylenediamine (p-PDA), 3,4'-diaminodiphenylmethane (3,4'-MDA), 4,4'-diaminodiphenylmethane (4,4'-MDA), 2,2'-bis(trifluoromethyl) -4,4'-diaminobiphenyl (TFMB), 1,3-bis(4-aminophenoxy)benzene (1,3,4-APB), 2,2'-bis(trifluoromethyl)-4,4'-diaminophenyl ether (6FODA), 2,2-bis(3-amino-4-hydroxyphenyl)hexafluoropropane (6FAP), 2,2-bis[4-(4-amino-phenoxy)phenyl]propane (BAPP); or is prepared by blending at least two polyamic acid solutions; the solid content of the polyamic acid solution is 5-40wt%; the electrospinning parameters are as following: the spinning voltage 15-100kV, preferably 16-80kV, more preferably 17-75kV, or 15-55kV, and the receiving distance 10-30cm.

35. The preparation method according to embodiment 33, characterized in that the thermal imidization process used in step B has a maximum temperature of 250-450°C, preferably 300-450°C, and a residence time of 0.1 - 30min, or 1-30min.

36. The preparation method according to embodiment 33, characterized in that the binder in step C is one or more of an aqueous PVDF emulsion, polyvinyl alcohol, polyethylene oxide, an acrylic water-soluble glue, styrene-butadiene rubber, sodium carboxymethylcellulose and polyvinylpyrrolidone; the weight parts of each component of the coating slurry are as following: 1-3 parts of binder, 89-52 parts of solvent, and 10-45 parts of polyimide; the dispersion liquid is water.

37. The preparation method according to embodiment 33, characterized in that in step D, the polyolefin separator is coated with polyimide on one side or both sides, and the coating method is one of electrostatic spraying, blade coating, extrusion coating, transfer coating, wire rod coating, dip coating, gravure or micro-gravure coating.

38. The preparation method according to embodiment 32, the coating slurry comprises high temperature resistant polymer microspheres or high temperature resistant polymer microspheres and inorganic particles, characterized in that the preparation method includes the following steps:

   (1) formulating a mixed coating slurry containing high temperature resistant polymer microspheres or high temperature resistant polymer microspheres and inorganic particles;
   (2) coating either one side or both sides of the base membrane with the coating slurry.

39. The preparation method according to embodiment 38, characterized in that the solid content of the coating slurry is 2-71.4wt%, preferably 4-70wt%, and more preferably 10-62wt%;
the viscosity of the coating slurry is 20-7000cP, preferably 100-6000cP, more preferably 150-5500cP.

40. The preparation method according to any one of embodiments 38 to 39, characterized in that the slurry solvent is one of water type solvent or organic solvent,

   preferably, the water type solvent includes pure water or a mixed solution of water and at least one of ethanol, ethylene glycol, glycerol, isopropyl alcohol, propylene glycol, butanol, and acetic acid;
   preferably, the organic solvent includes at least one of N,N-dimethylformamide, N,N-dimethylacetamide, N-methylpyrrolidone, dimethyl sulfoxide, acetone, ethanol, isopropanol, ethylene carbonate, and dimethyl carbonate.

41. The preparation method according to any one of embodiments 38 to 39, characterized in that the coating method of the coating includes at least one of electrostatic spraying, blade coating, rotating spraying, extrusion coating, transfer coating, dip coating, wire rod coating, gravure or micro-gravure coating.

42. The preparation method according to embodiment 32, characterized in that the coating slurry comprises high temperature resistant polymer nanofibers and inorganic particles, and the method includes the following steps:

   (1) formulating a coating slurry containing high temperature resistant polymer nanofibers and inorganic particles;
   (2) coating either one side or both sides of the base membrane with the coating slurry.

43. The preparation method according to embodiment 42, wherein the coating slurry comprises the following components by weight: 0.4-65 parts of high temperature resistant polymer nanofibers, 35-99.6 parts of inorganic particles, 100-5000 parts of slurry solvent; the sum of the weight parts of high temperature resistant polymer nanofibers and inorganic particles is 100.

44. The preparation method according to any one of embodiments 42 to 43, wherein the solid content of the coating slurry is 2-50wt%, preferably 6-48wt%, more preferably 10-43wt%; and/or
the viscosity of the coating slurry is 50-4000cP, preferably 100-3500cP, and more preferably 200-3000cP.

45. The preparation method according to any one of embodiments 42 to 44, wherein the slurry solvent is one of water type solvent or organic solvent,

   preferably, the water type solvent includes pure water or a mixed solution of water and at least one of ethanol, ethylene glycol, glycerol, isopropyl alcohol, and butanol;
   preferably, the organic solvent includes at least one of N,N-dimethylformamide, N,N-dimethylacetamide, N-methylpyrrolidone, dimethyl sulfoxide, acetone, ethanol, isopropanol, ethylene carbonate, and dimethyl carbonate.

46. The preparation method according to any one of embodiments 42 to 43, the coating slurry further comprises an additive selected from at least one of a binder, a surfactant, a dispersant, a wetting agent, a defoaming agent and the like.

47. The preparation method according to any one of embodiments 42 to 44, wherein the amount of slurry solvent is 100-5000 parts by weight, preferably 120-4000 parts by weight, and most preferably 150-2900 parts by weight; and/or

the amount of the binder is 0.5-12.5 parts by weight, preferably 0.6-12 parts by weight, more preferably 1.0-9 parts by weight; and/or
the amount of the surfactant is 0.1-5 parts by weight, preferably 0.2-4.9 parts by weight, more preferably 0.4-4.7 parts by weight; and/or
the amount of the dispersant is 0.1-7 parts by weight, preferably 0.2-6.9 parts by weight, more preferably 0.4-6.4 parts by weight; and/or
the amount of the wetting agent is 0.05-5 parts by weight, preferably 0.06-4.9 parts by weight, more preferably 0.09-4.7 parts by weight; and/or
the amount of the defoaming agent is 0.1-4 parts by weight, preferably 0.2-3.9 parts by weight, and more preferably 0.4-3.5 parts by weight.

48. The preparation method according to any one of embodiments 42 to 45, wherein the coating method of the coating includes at least one of electrostatic spraying, blade coating, rotating spraying, extrusion coating, transfer coating, dip coating, wire rod coating, gravure or micro-gravure coating.

49. A coating slurry comprising a slurry solvent and at least two of the following:

b2.1 high temperature resistant polymer microspheres,
b2.2 high temperature resistant polymer nanofibers, and
b2.3 inorganic particles.

50. The coating slurry according to embodiment 49, characterized in that it comprises high temperature resistant polymer nanofibers, inorganic particles and the slurry solvent, wherein the high temperature resistant polymer nanofibers are 0.4-65 parts by weight, the inorganic particles are 35-99.6 parts by weight parts, and the sum of the weight parts of high temperature resistant polymer nanofibers and inorganic particles is 100.

51. The coating slurry according to any one of embodiments 49 to 50, wherein the solid content of the coating slurry is 2-50wt%, preferably 6-48wt%, more preferably 10-43wt%; and/or
the viscosity of the coating slurry is 50-4000cP, preferably 100-3500cP, and more preferably 200-3000cP.

52. The coating slurry according to any one of embodiments 49 to 50, wherein the slurry solvent is one of water type solvent or organic solvent, preferably, the water type solvent includes pure water or a mixed solution of water and at least one of ethanol, ethylene glycol, glycerol, isopropyl alcohol, and butanol;
preferably, the organic solvent includes at least one of N,N-dimethylformamide, N,N-dimethylacetamide, N-methylpyrrolidone, dimethyl sulfoxide, acetone, ethanol, isopropanol, ethylene carbonate, and dimethyl carbonate.

53. The coating slurry according to any one of embodiments 49 to 51, the coating slurry further comprises an additive selected from at least one of a binder, a surfactant, a dispersant, a wetting agent, a defoaming agent and the like.

54. The coating slurry according to any one of embodiments 49 to 51, wherein the amount of slurry solvent is 100-5000 parts by weight, preferably 120-4000 parts by weight, and most preferably 150-2900 parts by weight; and/or

the amount of the binder is 0.5-12.5 parts by weight, preferably 0.6-12 parts by weight, more preferably 1.0-9 parts by weight; and/or
the amount of the surfactant is 0.1-5 parts by weight, preferably 0.2-4.9 parts by weight, more preferably 0.4-4.7 parts by weight; and/or
the amount of the dispersant is 0.1-7 parts by weight, preferably 0.2-6.9 parts by weight, more preferably 0.4-6.4 parts by weight; and/or
the amount of the wetting agent is 0.05-5 parts by weight, preferably 0.06-4.9 parts by weight, more preferably 0.09-4.7 parts by weight; and/or

the amount of the defoaming agent is 0.1-4 parts by weight, preferably 0.2-3.9 parts by weight, and more preferably 0.4-3.5 parts by weight.

55. A lithium ion battery, characterized in that the lithium ion battery includes a positive electrode, a negative electrode, an electrolyte and a separator, wherein the separator is the coated modified composite separator according to any one of embodiments 1-31 or the coated modified composite separator prepared by the method according to any one of embodiments 32 to 48.

56. A coated modified composite separator, characterized in that,

the coated modified composite separator includes a base membrane and a coating,
the coating is coated on either any one side or both sides of the base membrane,
the coating comprises high temperature resistant polymer nanofibers and at least one of:

b2.1 high temperature resistant polymer microspheres, and
b2.3 inorganic particles.

57. A preparation method of the coated modified composite separator according to embodiment 56, characterized in that it includes the following steps:

(1) formulating a coating slurry containing high temperature resistant polymer nanofibers and at least one of:

b2.1 high temperature resistant polymer microspheres, and
b2.3 inorganic particles;

(2) coating either one side or both sides of the base membrane with the coating slurry.

58. A coating slurry, comprising a slurry solvent, high temperature resistant polymer nanofibers and at least one of:

b2.1 high temperature resistant polymer microspheres, and
b2.3 inorganic particles.

59. A coated modified composite separator, characterized in that,

the coated modified composite separator includes a base membrane and a coating,
the coating is coated on either any one side or both sides of the base membrane,
the coating comprises:

b2.1 high temperature resistant polymer microspheres,
b2.2 high temperature resistant polymer nanofibers, and
b2.3 inorganic particles.

60. A preparation method of the coated modified composite separator according to embodiment 59, characterized in that it includes the following steps:

(1) formulating a coating slurry containing:

b2.1 high temperature resistant polymer microspheres,
b2.2 high temperature resistant polymer nanofibers, and
b2.3 inorganic particles;

(2) coating either one side or both sides of the base membrane with the coating slurry.

61. A coating slurry, comprising a slurry solvent and:

b2.1 high temperature resistant polymer microspheres,
b2.2 high temperature resistant polymer nanofibers, and
b2.3 inorganic particles.

General description and definitions of terms

The endpoints and any values of ranges disclosed herein are not limited to the precise ranges or values, but these ranges or values are to be understood to include values near such ranges or values. For numerical ranges, the endpoint values of each range, the endpoint values of each range and individual point values, and the individual point values can be combined with each other to obtain one or more new numerical ranges, and these numerical ranges shall be deemed as being specifically disclosed herein.

The foregoing descriptions of embodiments have been presented for purposes of illustration and description. It is not intended to be exhaustive or limit the present disclosure. Individual elements or features of a particular embodiment are generally not limited to that particular embodiment, but, where applicable, are interchangeable and can be used in other selected embodiments, even if not expressly shown or described. It can also be modified in many ways. Such modifications should not be considered a departure from the present disclosure, and all such modifications are intended to be included within the scope of present application.

A. Base membrane

There are no particularly limited of the types of the base membrane in present application, and it can be any type of base membrane; the base membrane is a polymer base membrane or a base membrane coated with inorganic particles, such as a ceramic base membrane, and the ceramic base membrane is the same as conventional ceramic base membranes referred to in this field, including both a polymer base membrane and a ceramic layer coated on at least one side of the polymer base membrane. In some embodiments, the thickness of the base membrane is 1.5-40 $\mu$m; preferably 2.0-35 $\mu$m, more preferably 3.5-30 $\mu$m. The thickness of the base membrane is preferably 2 $\mu$m or more, 3 $\mu$m or more, 4 $\mu$m or more, 5 $\mu$m or more, 7 $\mu$m or more, 9 $\mu$m or more, or 12 $\mu$m or more, and the thickness of the base membrane is preferably 37 $\mu$m or less, 35 $\mu$m or less, 33 $\mu$m or less, 30 $\mu$m or less, 28 $\mu$m orless, or 26$\mu$m or less.

Examples of the polymer base membrane include, but not limited to, at least one of polyolefin base membrane, cellulose base membrane, polyester base membrane, aramid base membrane, polyimide base membrane, and organic-inorganic hybrid base membrane. In some embodiments, the polymer base membrane includes a single-layer membrane, a double-layer membrane or a multi-layer membrane, and the polymer base membrane contained in each layer can be the same or different. In some embodiments, for a double-layer polyer membrane or a multi-layer polymer base membrane, the thickness of each layer may be same as or different from that of other layers. In some embodiments, for a double-layer polymer base membrane or a multi-layer polymer base membrane, each layer may be prepared by using same or different processes, such as co-extruding and/or laminating together. In some embodiments, the polymer base membrane includes a polyolefin base membrane, and the polyolefin can include, but not limited to polyethylene, polypropylene, polybutylene, copolymers of above polyolefins, and blends thereof.

In some embodiments, the polyolefin can be an ultra-low molecular weight, low molecular weight, medium molecular weight, high molecular weight, or ultra-high molecular weight polyolefin. For example, the ultra-high molecular weight polyolefin may have a molecular weight of 450,000 (450k) or higher, such as 500k or more, 600k or more, 700k or more, 800k or more, 1 million or more, 2 million or more, 3 million or more, etc. The high molecular weight polyolefin may have a molecular weight in the range of 250k to 450k, such as 250k to 400k, 250k to 350k or 250k to 300k. The medium molecular weight polyolefin may have a molecular weight of 150 to 250k, such as 150k to 225k, 150k to 200k, 150k to 200k, etc. The low molecular weight polyolefin may have a molecular weight in the range of 100k to 150k, such as 100k to 125k. The ultra-low molecular weight polyolefin may have a molecular weight of less than 100k. The above numerical values are weight average molecular weights. The polyolefin separator may have the following non-limiting constructions: PP, PE, PP/PP, PP/PE, PE/PP, PE/PE, PE/PP/PE, etc.

According to the present invention, there are no special requirements for the inorganic particle coating, such as the ceramic layer, in the inorganic particle coated base membrane, and the ceramic layers commonly used in this field can be selected. Ceramic particles in the ceramic layer can include, but not limited to, at least one of $Al_2O_3$ (including $\alpha$, $\beta$, $\gamma$ types), $SiO_2$, $BaSO_4$, BaO, titanium dioxide ($TiO_2$, rutile or anatase), CuO, MgO, $Mg(OH)_2$, $LiAlO_2$, $ZrO_2$, carbon nanotubes (CNT), BN, SiC, $Si_3N_4$, WC, BC, AlN, $Fe_2O_3$, BaTiOs, $MoS_2$, $V_2O_5$, PbTiOs, $TiB_2$, CaSiOs, molecular sieve (ZSM-5), clay, boehmite and kaolin, preferably at least one of $Al_2O_3$, $SiO_2$ and $BaSO_4$.

The separators disclosed in the present invention can additionally contain a filler, an elastomer, a wetting agent, a lubricant, a flame retardant, a nucleating agent, an antioxidant, a colorant and/or other additional components not inconsistent with the objectives of the present invention. For example, the substrate can contain fillers such as calcium carbonate, zinc oxide, diatomaceous earth, talc, kaolin, synthetic silica, mica, clay, boron nitride, silicon dioxide, titanium dioxide, barium sulfate, aluminum hydroxide, magnesium hydroxide, etc., or combinations thereof. The elastomer may include ethylene-propylene (EPR), ethylene-propylene-diene (EPDM), styrene-butadiene (SBR), styrene isoprene (SIR), ethylidene norbornene (ENB), epoxy resin and polyurethane, or combinations thereof. The wetting agent may include ethoxylated alcohols, primary polymeric carboxylic acids, glycols (such as polypropylene glycol and polyethylene glycol), functionalized polyolefins, and the like. The lubricant may include silicones, fluoropolymers, oleamide, stearamide, erucamide, calcium stearate, lithium stearate, or other metal stearates. The flame retardant may include brominated flame retardants, ammonium phosphate, magnesium hydroxide, aluminum oxide trihydrate, and phosphate esters. The nucleating agent may include any nucleating agent that is not inconsistent with the objectives of the present invention.

B. Coating and coating slurry

The coating of the present invention comprises at least two of the following: high temperature resistant polymer microspheres, high temperature resistant polymer nanofibers, and inorganic particles.

In some embodiments, the thickness of the coating is 0.2-10 $\mu$m, and the thickness of the coating is preferably 0.3$\mu$m or more, 0.4$\mu$m or more, 0.5$\mu$m or more, 0.7$\mu$m or more, 1$\mu$m or more, or 1.2$\mu$m or more, and the thickness of the coating layer is preferably 9 $\mu$m or less, 8 $\mu$m or less, 7 $\mu$m or less, 6 $\mu$m or less, or 5 $\mu$m or less. If the thickness of the coating is lower than 0.2 $\mu$m, the thermal dimensional stability, electrolyte retention rate and capacity retention rate of the modified separator will be reduced; if the thickness of the coating is higher than 10 $\mu$m, the difficulty of coating will increase, and at the same time, the electrolyte retention rate of the electrolyte increases, resulting in a decrease in the energy density of the battery.

In some embodiments, the coating and/or coating slurry comprise high temperature resistant polymer nanofibers and inorganic particles. The coating comprises, in parts by weight, 0.4-65 parts of high temperature resistant polymer nanofibers, 35-99.6 parts of inorganic particles, and the sum of the weight parts of high temperature resistant polymer nanofibers and inorganic particles is 100. In some embodiments, the weight parts of the high temperature resistant polymer nanofibers in the coating is preferably 1-64, 2-63, 3-62, 4-61, 5-59 or 7-58. In some embodiments, the weight parts of inorganic particles in the coating is preferably 36-99, 37-98, 38-97, 39-96, 41-95, or 42-93.

In some embodiments, the coating and/or coating slurry comprise high temperature resistant polymer microspheres and inorganic particles. The coating comprises, in parts by weight, 0.1-100 parts of high temperature resistant polymer microspheres, 99.9-0 parts of inorganic particles, preferably 0.1-99.9 parts of high temperature resistant polymer microspheres, and 99.9-0.1 parts of inorganic particles, and the sum of the weight parts of high temperature resistant polymer microspheres and inorganic particles is 100. In some embodiments, the weight parts of high temperature resistant microspheres in the coating is preferably 0.3-100, 1-100, 3-100, 5-100, 7-100 or 10-100. In some embodiments, the weight parts of inorganic particles in the coating is preferably 99.7-0, 99-0, 97-0, 95-0, 93-0 or 90-0.

In some embodiments, the coating and/or coating slurry comprise high temperature resistant polymer microspheres, or high temperature resistant polymer microspheres and high temperature resistant polymer nanofibers. In some embodiments, the coating and/or coating slurry comprise high temperature resistant polymer nanofibers, and at least one of high temperature resistant polymer microspheres and inorganic particles. In some embodiments, the coating and/or coating slurry comprise high temperature resistant polymer microspheres, high temperature resistant polymer nanofibers, and inorganic particles. The incorporation of high temperature resistant polymer nanofibers can form a network structure, increase the integrity of the coating, and can avoid the pulverizing problem of single component of microsphere structure caused by binder failure at high temperature.

In some embodiments, the coating slurry comprises high temperature resistant polymer microspheres and high temperature resistant polymer nanofibers, wherein the high temperature resistant polymer in the high temperature resistant polymer microspheres and high temperature resistant polymer nanofibers is polyimide. In above embodiments, the preparation method of the polyolefin composite separator modified by coating with polyimide includes the steps of:

A: preparing a polyamic acid solution by low-temperature condensation polymerization in a polar aprotic solvent using a dianhydride and a diamine as monomers, with intrinsic viscosity being controlled at 0.01-1 dl/g; and then preparing a polyamic acid material with nanofiber/microsphere composite morphology by using template method, spray drying technology, electrospinning technology, blowing spinning technology or blowing-assisted electrospinning, adjusting spinning parameters when necessary;

B: subjecting the polyamic acid material prepared in step A to high-temperature heating treatment, to thermally imidize the polyamic acid material into a polyimide material;

C: formulating a coating slurry: dispersing the polyimide material prepared in step B into a dispersion liquid and stirring evenly; adding a binder into the polyimide dispersion liquid and stirring evenly, with a stirring rate of 500-30000rpm;

D: applying evenly the coating slurry obtained in step C on the surface of the base membrane;

E: drying the composite separator obtained through the treatment of step D, wherein the drying temperature is 50-100°C, and the drying time is 0.1min-12h, or 2min-12h.

For the polyamic acid solution used in step A, the dianhydride is one or a mixture of two or more of pyromellitic dianhydride (PMDA), 3,3',4,4'-biphenyltetracarboxylic dianhydride (BPDA), 2,3,3',4'-biphenyltetracarboxylic dianhydride (α-BPDA), 4,4'-diphenyl ether dianhydride (ODPA), 3,3',4,4'-benzophenone tetracarboxylic acid dianhydride (BTDA), hexafluorodianhydride (6FDA), bisphenol A diether dianhydride (BPADA), 3,3,4,4-diphenyl sulfone tetracarboxylic dianhydrides (DSDA), the diamine is one or a mixture of two or more of 4,4'-diaminodiphenyl ether (ODA), p-phenylenediamine (p-PDA), 3,4'-diaminodiphenylmethane (3,4'-MDA), 4,4'-diaminodiphenylmethane (4,4'-MDA), 2,2'-bis(trifluoromethyl)-4,4'-diaminobiphenyl (TFMB), 1,3-bis(4-aminophenoxy)benzene (1,3,4-APB), 2,2'-bis(trifluoromethyl) -4,4'-diaminophenyl ether (6FODA), 2,2-bis(3-amino-4-hydroxyphenyl)hexafluoropropane (6FAP), 2,2-bis[4-(4-amino-phenoxy)phenyl]propane (BAPP); or is prepared by blending at least two polyamic acid solutions; the solid content of the polyamic acid solution is 5-40wt% ; the electrospinning parameters are as following: the spinning voltage 15-100kV, preferably 16-80kV, more preferably 17-75kV, or 15-55kV, and the receiving distance 10-30cm.

The thermal imidization process used in step B has a maximum temperature of 250-450°C, preferably 300-450°C, and a residence time of 0.1-30min, or 1-30min.

The binder in step C is one or more of an aqueous PVDF emulsion, polyvinyl alcohol, polyethylene oxide, an acrylic water-soluble glue, styrene-butadiene rubber, sodium carboxymethylcellulose and polyvinylpyrrolidone; the weight parts of each component of the coating slurry are as following: 1-3 parts of binder, 89-52 parts of solvent, and 10-45 parts of polyimide; the dispersion liquid is water.

In step D, the polyolefin separator is coated with polyimide on one side or both sides, and the coating method is one of electrostatic spraying, blade coating, extrusion coating, transfer coating, wire rod coating, dip coating, and gravure or micro-gravure coating.

In some embodiments, the coating and/or coating slurry further comprise an additive selected from at least one of a binder, a surfactant, a dispersant, a wetting agent, a defoaming agent and the like.

The binder includes, but not limited to, at least one of polyvinylidene fluoride and its copolymers, polyvinyl alcohol, polyacrylates, styrene-butadiene rubber, carboxymethylcellulose and its salts, polyvinylpyrrolidone, and polyimide. The amount of the adhesive is 0.5-12.5 parts by weight. In some embodiments, the amount of binder is preferably 0.6-12, 0.7-11, 0.8-10 or 1.0-9 parts by weight.

The surfactant includes, but not limited to, at least one of fluorocarbon surfactants, nonionic surfactants, cationic surfactants, and anionic surfactants, preferably perfluoroalkyl ether alcoholamine salts, perfluoroalkyl ether quaternary ammonium salts, potassium perfluoroalkyl ether carboxylate fluorocarbon surfactants, and polyethylene glycol type, polyol type, block copolyether and special polyether nonionic surfactants. The amout of the surfactant is 0.1-5 parts by weight. In some embodiments, the surfactant is preferably used in an amount of 0.2-4.9, 0.3-4.8, 0.4-4.7 or 0.6-4.5 parts by weight.

The dispersant includes, but not limited to at least one of tris(2-ethylhexyl) phosphate, sodium lauryl sulfate, methylpentanol, cellulose derivatives, polyacrylamide, guar gum, fatty acid polyethylene glycol esters, and cellulose ethers, preferably hydroxypropyl methylcellulose or polyacrylamide. The amout of the dispersant is 0.1-7 parts by weight. In some embodiments, the dispersant is preferably used in an amount of 0.2-6.9, 0.3-6.8, 0.4-6.4 or 0.6-6.0 parts by weight.

The wetting agent includes, but not limited to, at least one of monohydric alcohols, dihydric alcohols and trihydric alcohols; preferably at least one of ethanol, ethylene glycol, glycerol, isopropyl alcohol and butanol. The amount of the wetting agent is 0.05-5 parts by weight. In some embodiments, the amount of the wetting agent is preferably 0.06-4.9, 0.07-4.8, 0.09-4.7 or 0.11-4.3 parts by weight.

The defoaming agent includes, but not limited to, at least one of alcohols, fatty acids and fatty acid esters, amides, phosphate esters, silicones, polyethers, and polyether-modified polysiloxanes defoaming agents; preferably at least one of monoalkyl, dialkyl phosphates and fluorinated alkyl phosphates and polyether-modified silicones defoaming agents. The amout of the defoaming agent is 0.1-4 parts by weight. In some embodiments, the amount of the defoaming agent is preferably 0.2-3.9, 0.3-3.7, 0.4-3.5 or 0.6-3.3 parts by weight.

The coating method of the coating is not particularly limited, including but not limited to at least one of electrostatic spraying, blade coating, rotating spraying, extrusion coating, transfer coating, dip coating, wire rod coating, gravure or micro-gravure coating; preferably extrusion coating, gravure coating, or micro-gravure coating.

In some embodiments, the base membrane coated with the coating slurry is dried. The drying temperature is 40-210°C, preferably 50-200°C; and the drying time is 0.1-60min, or 1-60min, or 5-50min. The drying method is preferably oven drying.

b.1 High temperature resistant polymer microspheres

The high temperature resistant polymer microspheres include unmodified high temperature resistant polymer microspheres, surface modified high temperature resistant polymer microspheres, and/or inorganic hybrid high temperature resistant polymer microspheres.

The particle size of the high temperature resistant polymer microspheres is 3-20000 nm, preferably 5nm or more, 7nm or more, 9nm or more, 12nm or more, 15nm or more, 20 nm or more, and preferably 50 nm or less, 11000 nm or less, 13000 nm or less, 15000 nm or less, or 18000 nm or less.

The preparation method of the high temperature resistant polymer microspheres is not subject to special limitations, and includes, but not limited to, at least one of electrostatic spraying method, phase separation method, template method, precipitation method, blowing method, blowing assisted electrospinning method, centrifugal method, self-assembly method, solution spinning method, in-situ synthesis method, and reprecipitation method. In some embodiments, electrostatic spraying method is used to prepare the high temperature resistant polymer microspheres. In the polymer solution used for electrostatic spraying, the concentration of the spinning polymer is 3-30wt%, more preferably 8-20wt%. When the relative molecular mass of the polymer is fixed and other conditions are constant, the concentration of the spinning solution is the decisive factor affecting the entanglement of the molecular chains in the solution.

The polymer in the unmodified high temperature resistant polymer microspheres, the surface modified high temperature resistant polymer microspheres and inorganic hybrid high temperature resistant polymer microspheres includes but not limited to at least one of P84, polyetherimide, polyphosphazene, polyacrylonitrile, polystyrene, polyvinylidene fluoride, polyvinylidene fluoride copolymer, polyvinylidene fluoride-hexafluoropropylene, polymethyl methacrylate, polytetrafluoroethylene, polyimide, polyester, cellulose, polyether ether ketone, polyarylether, polyamide, and polybenzimidazole.

Polyimide microspheres are preferred. The polyimide in the polyimide microspheres is prepared by homopolycondensation and copolycondensation of a raw material mixture containing polybasic acid anhydride and polyamine.

The surface modified high temperature resistant polymer microspheres include, but not limited to, inorganic surface-modified high temperature resistant polymer microspheres, high temperature resistant polymer microspheres with polar groups after surface treating, or high temperature resistant polymer microspheres surface-coated with a functionalized organic substance layer containing polar group(s). The polar group includes but not limited to at least one of hydroxyl, carboxyl, sulfonic acid group, amino, phosphate ester group, halogen, and nitro. The functionalized organic substance containing polar group(s) includes but not limited to polymers such as at least one of polyphosphazene, polyacrylonitrile, polyphosphoric acid, polysiloxane, polyester polymer, polyetherimide, polyether ether ketone, polyarylether and polybenzimidazole, and aromatic sulfonic acid derivatives such as 8-aminopyrene-1,3,6-trisulfonic acid and its salts. It should be noted that the above-mentioned surface modification is not grafting on original particles to prepare core-shell structure. Compared with core-shell structure particles, which are difficult and costly to prepare, the surface modification of the present invention is simpler in preparation, has fewer components, and has lower process cost.

The inorganic hybrid high temperature resistant polymer microspheres contain an inorganic substance. The inorganic substances used for surface modification and for inorganic hybrid high temperature resistant polymer microspheres include but not limited to at least one of alumina, boehmite, magnesium oxide, zirconia, barium titanate, titanium dioxide, silica, magnesium hydroxide, and zinc oxide.

The inorganic particles in the coating include, but not limited to at least one of ceramics, boehmite, metal oxides, metal hydroxides, metal carbonates, silicates, kaolin, talc, minerals, and glass. In some embodiments, the inorganic particles comprise at least one of boehmite, alumina, silica, barium titanate, titanium dioxide, zinc oxide, magnesium oxide, magnesium hydroxide, zirconia, or an oxide solid electrolyte. Further, the oxide solid electrolyte includes at least one of perovskite type, NASICON type, LISICON type, garnet type and LiPON type electrolyte.

b.2 High temperature resistant polymer nanofibers

The high temperature resistant polymer nanofibers include unmodified high temperature resistant polymer nanofibers, surface modified high temperature resistant polymer nanofibers, and/or inorganic hybrid high temperature resistant polymer nanofibers.

The diameter of the high temperature resistant polymer nanofibers is 5-1500 nm, preferably 6 nm or more, 7 nm or more, 8 nm or more, 10 nm or more, 15 nm or more, or 20 nm or more, and preferably 1450 nm or less, 1400 nm or less, 1350 nm or less, 1300 nm or less, or 1200 nm or less. The length of the high temperature resistant polymer nanofibers is 0.5-1000 $\mu$m, preferably 0.6 $\mu$m or more, 1.0 $\mu$m or more, 3.0 $\mu$m or more, 5.0 $\mu$m or more, 7.0 $\mu$m or more, or 10.0 $\mu$m or more, and preferably 950 $\mu$m or less, 900 $\mu$m or less, 800 $\mu$m or less, 700$\mu$m or less, or 600$\mu$m or less. The aspect ratio of the high temperature resistant polymer nanofibers is 5-2000, preferably 10-1500, more preferably 20-500.

The preparation method of the high temperature resistant polymer nanofibers is not subject to special limitations, and includes, but not limited to, at least one of electrospinning method, phase separation method, template method, precipitation method, blowing method, blowing assisted electrospinning method, centrifugal method, self-assembly method, solution spinning method, and in-situ synthesis method. In some embodiments, electrospinning method is used to prepare the high temperature resistant polymer nanofibers. In the polymer solution used for electrospinning method, the concentration of the spinning polymer is 3-30wt%, more preferably 8-20wt%. When the relative molecular mass of the polymer is fixed and other conditions are constant, the concentration of the spinning solution is the decisive factor affecting the entanglement of the molecular chains in the solution. In the present invention, when the concentration of the spinning solution is within the above range, the spinning performance can be effectively ensured. Moreover, as the concentration of the spinning solution increases, the degree of polymer entanglement increases, resulting in a better spinning performance. In the present invention, when electrospinning is performed by using spinning solutions containing different polymers, the concentration of each spinning solution is independently selected from the above concentration ranges.

The unmodified high temperature resistant polymer nanofibers, the surface modified high temperature resistant polymer nanofibers and inorganic hybrid high temperature resistant polymer nanofibers include but not limited to at least one of P84 nanofibers, polyetherimide nanofibers, polyvinylidene fluoride and its copolymer nanofibers, polyvinylidene fluoride-hexafluoropropylene nanofibers, polytetrafluoroethylene nanofibers, polyphosphazene nanofibers, polyacrylonitrile nanofibers, polyimide nanofibers, polyester nanofibers, cellulose nanofibers, polyether ether ketone nanofibers, polyaryl ether nanofibers, polyamide nanofibers, and polybenzimidazole nanofibers.

The polyimide in the polyimide nanofibers is prepared by homopolycondensation and copolycondensation of a raw material mixture containing polybasic acid anhydride and polyamine.

The surface modified high temperature resistant polymer nanofibers include, but not limited to, inorganic surface-modified high temperature resistant polymer nanofibers, high temperature resistant polymer nanofibers with polar groups after surface treating, or high temperature resistant polymer nanofibers surface-coated with a functionalized organic substance layer containing polar group(s). The polar group includes but not limited to at least one of hydroxyl, carboxyl, sulfonic acid group, amino, phosphate ester group, halogen, and nitro. Compounds used for surface treatment include but not limited to oxidants such as potassium permanganate, chlorate, potassium dichromate and the like, acidic compounds such as sulfuric acid, nitric acid, phosphoric acid, hydrochloric acid and the like, alkaline compounds such as sodium hydroxide, potassium hydroxide, calcium hydroxide, lithium hydroxide, barium hydroxide, strontium hydroxide, rubidium hydroxide, aqueous ammonia, methylamine, ethylamine, dimethylamine, diethylamine, ethylenediamine, triethylamine, hydrazine hydrate, DMAB, salts of strong base and weak acid and the like. The functionalized organic substance containing polar group(s) includes but not limited to polymers such as at least one of polyphosphazene, polyacrylonitrile, polyphosphoric acid, polysiloxane, polyester polymer, polyetherimide, polyether ether ketone, polyarylether and polybenzimidazole, and aromatic sulfonic acid derivatives such as 8-aminopyrene-1,3,6-trisulfonic acid and its salts.

The inorganic hybrid high temperature resistant polymer nanofibers contain an inorganic substance. The inorganic substances used for surface modification and used for inorganic hybrid high temperature resistant polymer nanofibers include but not limited to at least one of alumina, boehmite, magnesium oxide, zirconia, barium titanate, titanium dioxide, silica, magnesium hydroxide, and zinc oxide.

b.3 Inorganic particles

In the coating according to the present invention, the inorganic particles are selected from inorganic particles commonly used in this field. The inorganic particles in the coating include, but not limited to, at least one of ceramics, metal oxides, metal hydroxides, metal carbonates, silicates, kaolin, talc, minerals, and glass. In some embodiments, inorganic particles in the coating include, but not limited to, at least one of $Al_2O_3$ (including $\alpha$, $\beta$, $\gamma$ types), $SiO_2$, $BaSO_4$, BaO, titanium dioxide ($TiO_2$, rutile or anatase), CuO, MgO, $Mg(OH)_2$, $LiAlO_2$, $ZrO_2$, BN, SiC, $Si_3N_4$, WC, BC, AlN, $Fe_2O_3$, BaTiOs, $MoS_2$, $V_2O_5$, PbTiOs, $TiB_2$, CaSiOs, molecular sieve (ZSM-5), clay, boehmite and kaolin, preferably using at least one of $Al_2O_3$, boehmite, MgO, $Mg(OH)_2$, titanium dioxide ($TiO_2$, rutile or anatase), $SiO_2$ and $BaSO_4$. In some embodiments, the inorganic particles include at least one of boehmite, alumina, silica, barium titanate, titanium dioxide, zinc oxide, magnesium oxide, magnesium hydroxide, zirconia, or an oxide solid electrolyte. Further, the oxide solid electrolyte includes at least one of perovskite type, NASICON type, LISICON type, garnet type and LiPON type electrolyte.

The average particle size of the inorganic particles is 10 nm-5 $\mu$m, preferably 11 nm or more, 13 nm or more, 15 nm or more, 20 nm or more, 25 nm or more, or 30 nm or more, and preferably 4.9 $\mu$m or less, 4.7 $\mu$m or less, 4.5 $\mu$m or less, 4.3 $\mu$m or less or 4.0 $\mu$m or less. In some embodiments, the inorganic particles have an average particle size of 10 nm-5 $\mu$m, preferably 11 nm-4.9 $\mu$m, and most preferably 15 nm-4.5 $\mu$m.

C. Lithium-ion battery

The present invention further provides a lithium ion battery, which includes a positive electrode, a negative electrode, an electrolyte and a separator, wherein the separator is said coated modified composite separator.

The positive electrode is made of a positive electrode material for lithium-ion battery, a conductive agent and a binder. The positive electrode materials used include any positive electrode materials that can be used in lithium-ion batteries, such as lithium cobaltate ($LiCoO_2$), lithium nickelate ($LiNiO_2$), lithium manganate ($LiMn_2O_4$), lithium iron phosphate ($LiFePO_4$), lithium iron manganese phosphate ($LiFe_xMn_{1-x}PO_4$), lithium nickel-cobalt-manganate ($LiNi_{1-x-y}Co_yMn_xO_2$), lithium nickel-cobalt-aluminate ($LiNi_{1-x-y}Co_yAl_xO_{2e}$) and the like.

The negative electrode is made of a negative electrode material for lithium-ion battery, a conductive agent and a binder. The negative electrode materials used include any negative electrode materials that can be used in lithium-ion batteries, such as at least one of graphite, soft carbon, hard carbon, silicon carbon, silicon oxide carbon and the like.

The binder includes but not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, polyamic acid, polyimide, aramid fiber and the like.

The conductive material is used to improve the conductivity of the electrodes, including but not limited to at least one of natural graphite, artificial graphite, carbon black, carbon fiber, carbon nanotube, graphene, carbon nanofiber, metal powder, metal fiber and the like. As the metal powder and metal fiber, metal copper, nickel, aluminum, silver and the like can be used.

The main improvement of the lithium-ion battery provided by the present invention is the using of the above-mentioned coated modified composite separator, and the arrangement (connection mode) of the positive electrode, negative electrode, separator and electrolyte can be the same as the prior art, which is known to those skilled in the art and will not be elaborated herein.

The preparation method of the lithium-ion battery provided by the present invention includes stacking or winding the positive electrode, the separator and the negative electrode in sequence into a cell, and then infusing the electrolyte into the cell and sealing, wherein the separator is said coated modified composite separator.

Examples

In order to make the purpose, technical solutions and advantages of the examples of the present invention clearer, the technical solutions in the examples of the present invention will be clearly and completely described below with reference to the figures in the examples of the present invention. Apparently, the described examples are a part of examples of the present invention, not all examples. Based on the examples of the present invention, all other examples obtained by those skilled in the art without creative work fall within the protection scope of the present invention.

In the following examples of the present invention, the abbreviation C represents inorganic particles, the abbreviation P represents high temperature resistant polymer nanofibers and/or microspheres, and the abbreviation CP represents the composite of inorganic particles and high temperature resistant polymer nanofibers and/or microspheres.

The number in front of the abbreviation represents the coating thickness, for example, 4C represents an inorganic coating with a thickness of 4 $\mu$m, and 4CP represents a composite coating of inorganic particles and high temperature resistant polymer nanofibers and/or microspheres with a thickness of 4 $\mu$m.

The coating thickness in the examples of the present invention refers to the thickness after drying.

Shrinkage rate

The modified composite separator is cut into a 5cm $\times$ 5cm size separator and placed in an oven, and is kept at 150 °C or 200 °C for 30 minutes. The method for testing the thermal shrinkage rate refers to Chinese standard GBIT 36363-2018. The thermal shrinkage rate of the separator is measured in the longitudinal direction (MD) and transverse direction (TD), and then the higher value of the thermal shrinkage rate in MD and TD is defined as the thermal shrinkage rate of the separator.

Measurement of tensile strength

The method for measuring the tensile strength of modified composite separators is in accordance with Chinese standard GBIT 36363-2018. The measurement is made on a type 2 sample with a width of (15$\pm$0.1) mm at conditions of an initial distance between the clamps of (100$\pm$5) mm and a test speed of (250$\pm$10) mm/min, and the maximum strength value during the tensile process of the sample being taken as tensile strength to record and compare. The tensile strength is measured in the longitudinal direction (MD) and the transverse direction (TD) respectively, and then the lower value of the tensile strength in MD and TD is defined as the tensile strength of the modified composite separator.

Wherein, the 200 °C tensile strength refers to the tensile strength tested according to the above method of samples cutted from the modified composite separator after it is maintained at 200 °C for 30 minutes and tested for heat shrinkage rate.

Measurement of air permeability

The method for measuring the air permeability of modified composite separators is in accordance with Chinese standard of GBIT 36363-2018. 3 pieces of modified composite separators with a size of 100mm*100mm are taken for the measurement. The modified composite separator is placed in a BTY-B2P type air permeability tester of Labthink Company for air permeability testing. Take the average value of the three test results as the air permeability of the modified composite separators.

Porosity

A modified composite separator is cut into a 2cm×2cm square sample. The mass of a sample is weighed as $W_a$, and it is then put into a vacuum oven and heated at 60 °C for 2 hours to remove water. The dried fiber membrane after drying is completely soaked in n-butanol for at least 2 hours. The solvent on the membrane surface is completed absorbed through a filter paper. The mass of the membrane is then weighed as $W_b$. The porosity is calculated by using the following formula:

$$\text{Porosity} = \frac{\dfrac{W_b - W_a}{\rho_b}}{\dfrac{W_b - W_a}{\rho_b} + \dfrac{W_a}{\rho_p}} \times 100\%$$

In the formula: $\rho_p$: density of the modified composite separator
$\rho_b$: density of n-butanol, 0.81g/mL.

Ionic conductivity

A modified composite separator is cut into discs of corresponding specifications. Their thicknesses are measured. It is placed into a vacuum oven with the temperature being set to 80 °C, and kept at the temperature for 10 hours. The assembly of a button battery is performed in a glove box, with the atmosphere in the box being argon and the sequence of shell, gasket, separator containing electrolyte, gasket, shell. After the battery is installed, let it stand for 12 hours. AC impedance is measured with a chemical workstation. Its amplitude is set to 5 mV, the time is 2 s, and the test range is $1\text{-}10^5$ Hz. The internal resistance $R_d$ of the separator can be obtained from the AC impedance diagram, and the ionic conductivity can be calculated according to the formula:
$\delta = d/(R_d{*}S)$, where $R_d$ is the internal resistance of the modified composite separator, S is the area of the stainless steel gasket, and d is the thickness of the modified composite separator.

Battery capacity retention rate

A full battery is made by using nickel-rich 8 series NCM ternary material (S85E) and a negative electrode silicon oxide carbon 450: the mass ratio of positive electrode plate mass proportion active material (S85E): adhesive (PVDF): conductive agent (SP) = 95:1.8:3.2, solid content is 65wt%, solvent is NMP; negative electrode plate mass proportion active material (silicon oxide carbon 450): binder (SBR: CMC=2.5:1.5): conductive agent (SP) =95:4.0:1.0, the solid content is 45wt%, and the solvent is water. A 2Ah soft-packed laminated battery is made with the above electrode plates, and is performed a cycle test at 1C, with the ratio of the discharge capacity of the 100th cycle to the discharge capacity of the first cycle as the capacity retention rate.

Experiment series 1

Example 1.1

Preparation of PMDA/ODA system polyimide (PI) with fiber/microsphere composite morphology: the monomer pyromellitic dianhydride (PMDA) and the monomer 4,4'-diaminodiphenyl ether (ODA) were weighed at a molar ratio of 1:1 and reacted in the solvent N,N-dimethylformamide (DMF) in a 0 °C ice-water bath for 10 hours to obtain a clear and transparent polyamic acid solution with a mass concentration of 12%. The polyamic acid solution was electrospinned in an electric field with an electric field intensity of 1kV/cm. A polyamic acid film was collected through a stainless steel drum, and then the polyamic acid film was peeled off from the drum and placed in a high-temperature furnace for imidization treatment. The temperature rising program was: rising from room temperature to 300 °C at a heating rate of 5 °C/min, maintaining at 300 °C for 1 hour, opening the heating furnace, and naturally cooling to room temperature.
Formulating a coating slurry: a polymer binder, a mixed solvent of water and ethanol, and the polyimide film were mixed in a weight ratio of 1:79:20 to prepare the coating slurry. First, 0.8g of the polyimide film was weighed and dispersed in 3.16g of a mixed solvent of water and ethanol to obtain a polyimide dispersion. Then, 0.04g CMC was weighted and added to the polyimide dispersion, stirring with a high-speed homogenizer at a rotation speed of 1000 rpm for 10 minutes.

Coating: the stirred PI slurry was put into a vacuum oven for 1 hour for defoaming treatment. The slurry was then evenly coated on one side of a PE separator and a single-sided ceramic PE separator using microgravure coating. The thicknesses of the base membrane were 7 and 7+2 μm, respectively marked as 7 and 7+2C. After coating, the thickness of the coating was 3 μm, and the membrane thicknesses were 10 and 12 μm, respectively marked as 7+3P and 7+2C+3P.

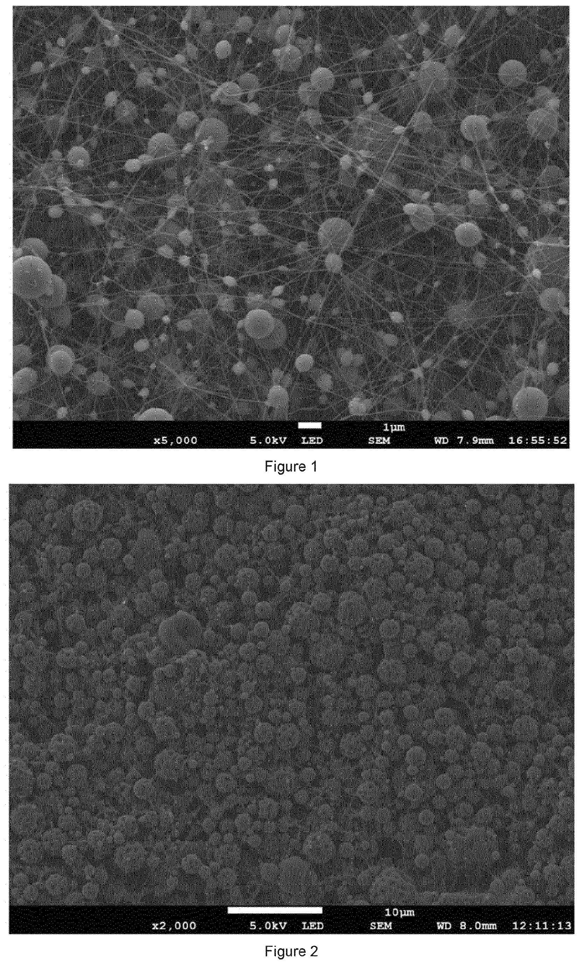

Drying: the separator coated with PI slurry was placed in a constant temperature oven to dry. The drying temperature was 50-100 °C and the drying time was 0.5h-12h. The obtained polyimide with fiber/microsphere composite morphology is shown in Figure 1, and the morphology of the obtained fiber/microsphere composite structure PI-coated polyolefin composite separator is shown in Figure 2.

After maintaining at 150 °C for 30 minutes, the heat shrinkage rate of the PE base membrane was 85%, the heat shrinkage rate of the PE/PI composite membrane was 4%; the heat shrinkage rate of the single-sided ceramic PE separator was 6%, and the heat shrinkage rate of the PI/PE/ceramic composite membrane was 0%.

After maintaining at 200 °C for 30 minutes, the heat shrinkage rate of the PE base membrane was 87%, the heat shrinkage rate of the PE/PI composite membrane was 4.5%; the heat shrinkage rate of the single-sided ceramic PE separator was 7%, and the heat shrinkage rate of the PI/PE/ceramic composite membrane was 0%.

Example 1.2

Preparation of PMDA/4,4'-MDA system polyimide with fiber/microsphere composite morphology: the monomer pyromellitic dianhydride (PMDA) and the monomer 4,4'-diaminodiphenyl ether (MDA) were weighed at a molar ratio of 1:1 and reacted in the solvent N,N-dimethylformamide (DMF) in a 0 °C ice-water bath for 10 hours to obtain a clear and transparent polyamic acid solution with a mass concentration of 12%. The polyamic acid solution was electrospinned in an electric field with an electric field intensity of 1kV/cm. A polyamic acid film was collected through a stainless steel drum, and then the polyamic acid film was peeled off from the drum and placed in a high-temperature furnace for imidization treatment. The temperature rising program was: rising from room temperature to 300 °C at a heating rate of 5 °C/min, maintaining at 300 °C for 1 hour, opening the heating furnace, and naturally cooling to room temperature.

Formulating a coating slurry: a polymer binder, a mixed solvent of water and ethanol, and the polyimide film were mixed in a weight ratio of 1:79:20 to prepare the coating slurry. First, 0.8g of the polyimide film was weighed and dispersed in 3.16g of a mixed solvent of water and ethanol to obtain a polyimide dispersion. Then, 0.04g CMC was weighted and added to the polyimide dispersion, stirring with a high-speed homogenizer at a rotation speed of 1000 rpm for 10 minutes.

Coating: the stirred PI slurry was put into a vacuum oven for 1 hour for defoaming treatment. The slurry was then evenly coated on one side of a PE separator and a single-sided ceramic PE separator using microgravure coating.

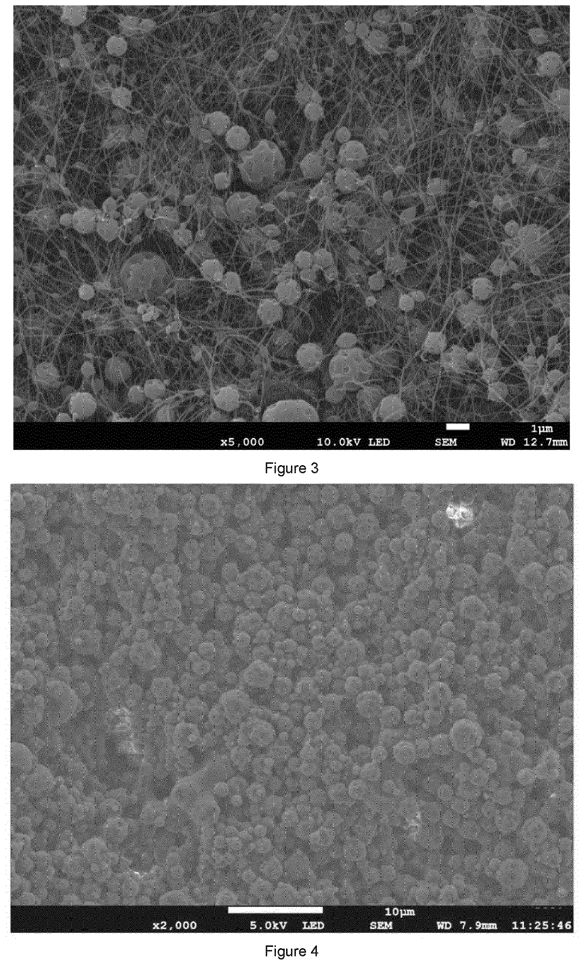

Drying: the separator coated with PI slurry was placed in a constant temperature oven to dry. The drying temperature was 50-100 °C and the drying time was 0.5h-12h. The thicknesses of the base membrane were 7 and 7+2 μm, respectively marked as 7 and 7+2C. After coating, the thickness of the coating was 3 μm, and the membrane thicknesses were 10 and 12 μm, respectively marked as 7+3P and 7+2C+3P. The obtained polyimide with fiber/microsphere composite morphology is shown in Figure 3, and the morphology of the obtained fiber/microsphere composite structure PI-coated polyolefin composite separator is shown in Figure 4.

After maintaining at 150 °C for 30 minutes, the heat shrinkage rate of the PE base membrane was 85%, the heat shrinkage rate of the PE/PI composite membrane was 3.5%; the heat shrinkage rate of the single-sided ceramic PE separator was 6%, and the heat shrinkage rate of the PI/PE/ceramic composite membrane was 0%.

After maintaining at 200 °C for 30 minutes, the heat shrinkage rate of the PE base membrane was 87%, the heat shrinkage rate of the PE/PI composite membrane was 4%; the heat shrinkage rate of the single-sided ceramic PE separator was 7%, and the heat shrinkage rate of the PI/PE/ceramic composite membrane was 0%.

Example 1.3

Preparation of PMDA/p-PDA system polyimide with fiber/microsphere composite morphology: the monomer pyromellitic dianhydride (PMDA) and the monomer p-phenylenediamine (p-PDA) were weighed at a molar ratio of 1:1 and reacted in the solvent N,N-dimethylformamide (DMF) in a 0 °C ice-water bath for 10 hours to obtain a clear and transparent polyamic acid solution with a mass concentration of 12%. The polyamic acid solution was electrospinned in an electric field with an electric field intensity of 1kV/cm. A polyamic acid film was collected through a stainless steel drum, and then the polyamic acid film was peeled off from the drum and placed in a high-temperature furnace for imidization treatment. The temperature rising program was: rising from room temperature to 300 °C at a heating rate of 5 °C/min, maintaining at 300 °C for 1 hour, opening the heating furnace, and naturally cooling to room temperature.

Formulating a coating slurry: a polymer binder, a mixed solvent of water and ethanol, and the polyimide film were mixed in a weight ratio of 1:79:20 to prepare the coating slurry. First, 0.8g of the polyimide film was weighed and dispersed in 3.16g of a mixed solvent of water and ethanol to obtain a polyimide dispersion. Then, 0.04g CMC was weighted and added to the polyimide dispersion, stirring with a high-speed homogenizer at a rotation speed of 1000 rpm for 10 minutes.

Coating: the stirred PI slurry was put into a vacuum oven for 1 hour for defoaming treatment. The slurry was then evenly coated on one side of a PE separator and a single-sided ceramic PE separator using microgravure coating.

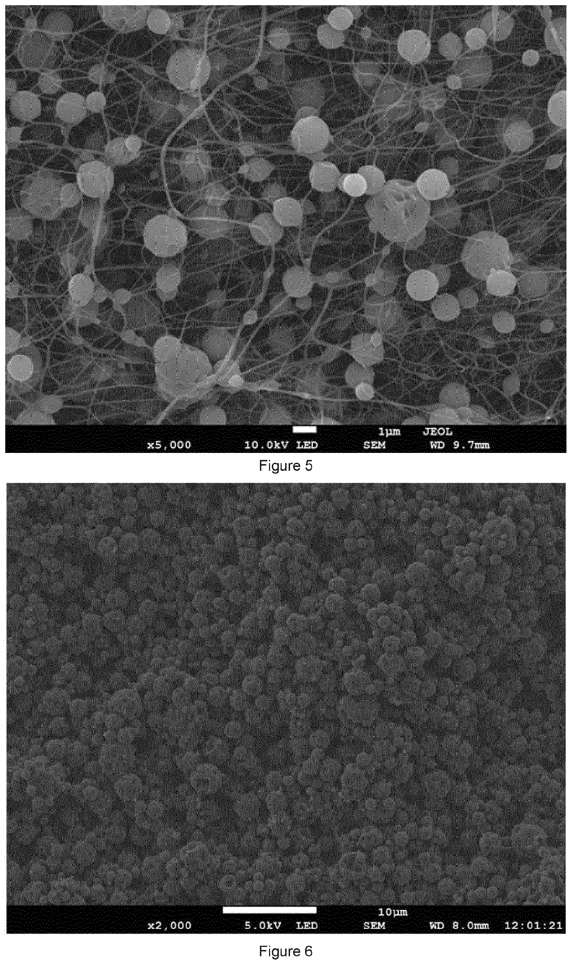

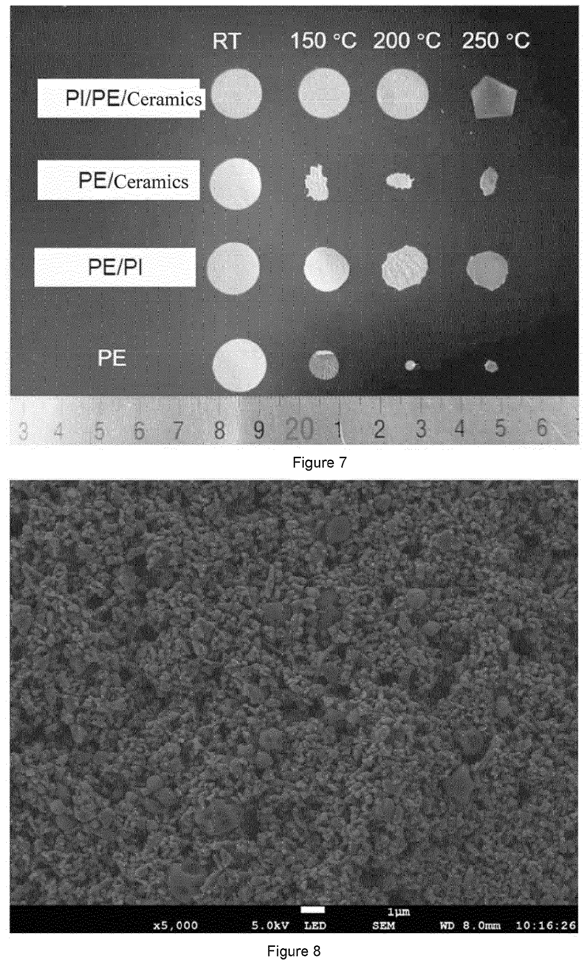

Drying: the separator coated with PI slurry was placed in a constant temperature oven to dry. The drying temperature was 50-100 °C and the drying time was 0.5h-12h. The thicknesses of the base membrane were 7 and 7+2 μm, respectively marked as 7 and 7+2C. After coating, the thickness of the coating was 3 μm, and the membrane thicknesses were 10 and 12 μm, respectively marked as 7+3P and 7+2C+3P. The obtained polyimide with fiber/microsphere composite morphology is shown in Figure 5, the morphology of the obtained fiber/microsphere composite structure PI-coated polyolefin composite separator is shown in Figure 6, and thermal shrinkage comparison pictures of the obtained fiber/microsphere composite structure PI-coated polyolefin composite separator at different temperatures are shown in Figure 7.

After maintaining at 150 °C for 30 minutes, the heat shrinkage rate of the PE base membrane was 85%, the heat shrinkage rate of the PE/PI composite membrane was 3%; the heat shrinkage rate of the single-sided ceramic PE separator was 6%, and the heat shrinkage rate of the PI/PE/ceramic composite membrane was 0%.

After maintaining at 200 °C for 30 minutes, the heat shrinkage rate of the PE base membrane was 87%, the heat shrinkage rate of the PE/PI composite membrane was 3.2%; the heat shrinkage rate of the single-sided ceramic PE separator was 7%, and the heat shrinkage rate of the PI/PE/ceramic composite membrane was 0%.

Experiment series 2

Example 2.1

A polyimide microsphere/ceramic coated polyethylene separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a clear and transparent polyamic acid solution with a mass concentration of 6%. PAA microspheres were prepared therefrom using electrostatic spraying method. The obtained microspheres were subjected to imidization treatment in a high temperature furnace. The temperature rising program was: rising from room temperature to 300 °C at a heating rate of 5 °C/min, maintaining for 1 hour and obtaining polyimide microspheres.

(2) 10g of polyimide microspheres (average particle size 800nm), 90g of ceramics, 1.5g of a binder sodium carboxymethyl cellulose, 200g of a mixed solvent of water and ethanol (ethanol 5wt%), 0.3g of a surfactant perfluoroalkyl ether quaternary ammonium salt, 0.3g of a dispersant hydroxypropylmethylcellulose, 0.06g of a wetting agent glycerol, 0.3g of a defoaming agent fluorinated alkyl phosphate were weighed; the components were solved and evenly dispered through stirring, to obtain a coating slurry.

(3) the stirred coating slurry was put into a vacuum oven for 1 hour for defoaming treatment, and then evenly coated on one side or both sides of a 7 μm polyethylene separator using microgravure coating to obtain coated polyethylene separators, marked as 7+4CP and 7+4CP+4CP; the non-ceramic side of the 7+4μm single-sided ceramic polyethylene separator, marked as 7+4C+4P, which indicates a base membrane thickness of 7μm and a ceramic coating thickness of 4 μm, the coating thickness obtained from the coating slurry from (2) of 4 μm.

(4) Drying: the coated polyethylene separators were placed in a constant temperature oven to dry. The drying temperature was 60 °C and the drying time was 0.5h. The morphology of the obtained modified composite polyethylene separator is shown in Figure 8.

The above separators were tested for performance respectively, and the results are shown in Table 1 below:

Table 1

| Separator specifications | 150 °C shrinkage rate (%) | Air permeability [s/100mL (1.22kPa)] | Porosity (%) | Punc- ture strength (N/$\mu$m) | Ionic conduc-tivity (mS/cm) | Battery capacity retention rate (%) |
|---|---|---|---|---|---|---|
| 7+4CP | 1.6 | 185 | 54.6 | 0.31 | 0.52 | 98.1 |
| 7+4CP+4CP | 0.3 | 200 | 57.7 | 0.37 | 0.56 | 99.0 |
| 7+4C+4CP | 0.5 | 193 | 53.9 | 0.34 | 0.53 | 98.4 |
| 7+4C | 6.0 | 187 | 47.3 | 0.23 | 0.37 | 96.5 |
| 7+4C+4C | 1.3 | 205 | 50.7 | 0.25 | 0.41 | 97.3 |

Example 2.2

A polyimide microsphere/boehmite coated polypropylene separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a clear and transparent polyamic acid solution with a mass concentration of 20%. Polyamic acid microspheres were prepared therefrom by blowing electrostatic spraying method. The microspheres were subjected to imidization treatment in a high temperature furnace. The temperature rising program was: rising from room temperature to 300 °C at a heating rate of 5 °C/min, maintaining for 1 hour and obtaining polyimide microspheres.

(2) 80g of boehmite, 20g of polyimide microspheres (average particle size of microspheres: 200nm), and 6.4g of PVDF were weighed and dispersed in 450g of NMP to obtain a coating slurry.

(3) The stirred coating slurry was put into a vacuum oven for 1 hour for defoaming treatment, and then evenly coated on one side or both sides of a 12 $\mu$m polypropylene separator using microgravure coating to obtain two types of coated polypropylene separators.

(4) The coated polypropylene separators were placed in a constant temperature oven to dry. The drying temperature was 60 °C and the drying time was 1 hour. The modified composite separators coated on one side and both sides obtained in step (3) were marked as 12+3CP and 12+3CP+3CP respectively. The non-ceramic side of a 12+3$\mu$m single-sided ceramic polypropylene separator was evenly coated with the coating method according to step (3), marked as 12+3C+3CP, which indicates the base membrane thickness of 12$\mu$m, the ceramic coating thickness of 3$\mu$m, and the thickness of the coating obtained from the coating slurry of (2) of 3 $\mu$m.

The above separators were tested for performance respectively, and the results are shown in Table 2 below:

Table 2

| Separator specifications | 150 °C Shrink-age rate (%) | Air permeability [s/100mL (1.22kPa)] | Porosity (%) | Puncture strength (N/$\mu$m) | Ionic conduc-tivity (mS/cm) | Battery capacity reten-tion rate (%) |
|---|---|---|---|---|---|---|
| 12+3CP+3CP | 0.2 | 264 | 57.1 | 0.40 | 0.46 | 99.1 |
| 12+3C+3CP | 0.5 | 257 | 55.2 | 0.37 | 0.44 | 99.0 |
| 12+3C+3C | 2.3 | 245 | 49.4 | 0.21 | 0.41 | 96.9 |

Example 2.3

A hybrid polyimide microsphere/ceramic-coated polyethylene separator

(1) The monomer pyromellitic dianhydride (PMDA) and the monomer 4,4'-diaminodiphenyl ether (ODA) were weighed at a molar ratio of 1:1, added to the solvent N,N-dimethylformamide (DMF) and synthesized to obtain a clear and transparent polyamic acid solution (PAA) with a mass concentration of 10%. 100nm LATP solid electrolyte was dispersed in a PAA solution to obtain a dispersion of LATP and polyamic acid. The dispersion was subjected to electrostatic spraying to obtain LATP/PAA hybrid microspheres. The microspheres were placed in a high-temperature furnace for imidization treatment. The temperature rising program was: rising from room temperature to 300 °C at a heating rate of 5 °C/min, maintaining for 1 hour to obtain LATP/PI hybrid microspheres.

(2) 50g of LATP/PI hybrid microspheres (average particle size of microspheres: 300nm), 50g of ceramics, 5.0g of a binder PVDF, 390g of a mixed solvent of water and ethanol (10wt% ethanol), 2.5 g of a surfactant perfluoroalkyl ether quaternary ammonium salt, 2.5g of a dispersant hydroxypropylmethylcellulose, and 0.1g of a wetting agent glycerol were weighed and evenly stirred to obtain a coating slurry.

(3) The stirred coating slurry was put into a vacuum oven for 1 hour for defoaming treatment, and then evenly coated on both sides of a 7 $\mu$m polyethylene separator using extrusion coating to obtain a coated polyethylene separator.

(4) The coated polyethylene separator was placed in a constant temperature oven to dry. The drying temperature was 60 °C and the drying time was 1 hour. The separator was marked as 7+2CP+2CP.

The above separator was tested for performance, and the result is shown in Table 3 below:

Table 3

| Separator specifications | 150 °C shrinkage rate (%) | Air permeability [s/ 100mL (1.22kPa)] | Porosity (%) | Puncture strength (N/ $\mu$m) | Ionic conductivity (mS/cm) | Battery capacity retention rate (%) |
|---|---|---|---|---|---|---|
| 7+2CP+2CP | 0.8 | 211 | 49.7 | 0.35 | 0.54 | 99.5 |

Example 2.4

A polyacrylonitrile (PAN) microsphere/magnesium oxide coated polypropylene separator

(1) 7.3g polyacrylonitrile was dissolved in 92.7g N-methylpyrrolidone (NMP), and stirred to obtain a clear and transparent PAN solution with a mass concentration of 7.3%. PAN microspheres were prepared by blowing electrostatic spraying method.

(2) 5g of PAN microspheres (average particle size of microspheres: 1000nm) and 95g of magnesium oxide were weighed and dispersed in 240g of water, and stirred at high speed to obtain a PAN microspheres/magnesium oxide dispersion. Then 5.0g of sodium carboxymethylcellulose was weighed and dissolved in 150g of water to fully dissolve it. The above two slurries were mixed and stirred evenly to obtain a coating slurry.

(3) The stirred coating slurry was put into a vacuum oven for 1 hour for defoaming treatment, and then evenly coated on both sides of a 12 $\mu$m polypropylene separator using microgravure coating to obtain a coated polypropylene separator.

(4) The coated polypropylene separators were placed in a constant temperature oven to dry. The drying temperature was 60 °C and the drying time was 1 hour. The thickness of the dried coating was 3 $\mu$m and the separator was marked as 12+3CP+3CP.

The above separators were tested for performance respectively, and the results are shown in Table 4 below:

Table 4

| Separator specifications | 150 °C shrinkage rate (%) | Air per- meability [s/ 100mL (1.22kPa)] | Poros- ity (%) | Puncture strength (N/ $\mu$m) | Ionic conductivity (mS/cm) | Battery capacity retention rate (%) |
|---|---|---|---|---|---|---|
| 12+3CP+3CP | 0.4 | 184 | 49.7 | 0.30 | 0.42 | 98.5 |

(continued)

| Separator specifications | 150 °C shrinkage rate (%) | Air per- meability [s/ 100mL (1.22kPa)] | Poros- ity (%) | Puncture strength (N/ $\mu$m) | Ionic conductivity (mS/cm) | Battery capacity retention rate (%) |
|---|---|---|---|---|---|---|
| 12+3C+3C | 2.9 | 182 | 45.6 | 0.22 | 0.35 | 95.2 |

Example 2.5

A polyimide/silica microsphere/$Li_7La_3Zr_2O_{12}$ (LLZO) garnet type solid oxide electrolyte coated polyethylene separator

(1) 90g of the monomer pyromellitic dianhydride (PMDA) and the monomer 4,4'-diaminodiphenyl ether (ODA) were weighted in a molar ratio of 1:1, and added to the solvent N,N-dimethylformamide (DMF) and synthesized to obtain a clear and transparent polyamic acid solution with a mass concentration of 12%. 10g TEOS was added and stirred evenly. Polyamic acid microspheres were prepared therefrom by electrostatic spraying method. The microspheres were placed in a high-temperature furnace for imidization treatment. The temperature rising program was: rising from room temperature to 300 °C at a heating rate of 5 °C/min, maintaining at 300 °C for 1 hour to obtain polyimide/silica microspheres, which contain silica on the surface and inside.

(2) 1g of polyimide/silica microspheres (average particle size of microspheres: 1300nm), 99g of LLZO, 5g of polyacrylamide, 1.8g of a surfactant perfluoroalkyl ether quaternary ammonium salt, 0.5g of a dispersant hydroxypropylmethylcellulose, 0.5g of a wetting agent glycerol, and 0.2g of a defoaming agent were solved in 140g of water and sufficiently stirred to dissolve to obtain a coating slurry.

(3) The stirred coating slurry was put into a vacuum oven for 1 hour for defoaming treatment. The slurry was then evenly coated on both sides of a 7 $\mu$m polyethylene separator using microgravure coating method.

(4) The coated polyethylene separator was placed in a constant temperature oven to dry. The drying temperature was 55 °C and the drying time was 0.5 hour.

The above separator was tested for performance, and the result is shown in Table 5 below:

Table 5

| Separator specifications | 150 °C shrinkage rate (%) | Air permeability [s/ 100mL (1.22kPa)] | Po- ros- ity (%) | Puncture strength (N/ $\mu$m) | Ionic conductivity (mS/cm) | Battery capacity retention rate (%) |
|---|---|---|---|---|---|---|
| 7+2CP+2CP | 0.2 | 195 | 50.8 | 0.33 | 0.53 | 99.7 |

Example 2.6

A polyimide nanosphere/boehmite-coated polyethylene composite separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a clear and transparent polyamic acid solution with a mass concentration of 10%. Polyamic acid(PAA) microspheres were prepared therefrom by electrostatic blowing method. The temperature of the obtained microspheres was raised from room temperature to 300 °C at a heating rate of 5 °C/min, maintaining for 1 hour to obtain polyimide microspheres.

(2) 20g of polyimide microspheres (average particle size of the microspheres: 750nm), 80g of boehmite (average particle size of 500nm), 1.5g of sodium carboxymethylcellulose, 175g of a mixed solvent of water and ethanol (ethanol 5wt%), 0.3g of a surfactant perfluoroalkyl ether quaternary ammonium salt, 0.3g of a dispersant hydroxypropyl methylcellulose, 0.06g of a wetting agent glycerol were weighed and stirred evenly to obtain a coating slurry.

(3) The coating slurry was put into a vacuum oven for 1 hour for defoaming treatment, and then evenly coated on both sides of a 7 μm polyethylene separator using microgravure coating method to obtain a coated modified separator.

(4) The coated modified separator was placed in a constant temperature oven to dry. The drying temperature was 55 °C and the drying time was 1 hour. The obtained modified composite polyethylene separator was marked as 7+2CP+2CP.

The preparation process of Examples 2.7-2.14 was the same as that of Example 2.6, except that the inorganic particles and/or the high temperature resistant microspheres used in the coating were different.

The test results of test performance of Examples 2.6-2.14 are shown in Table 6.

Table 6

| Example | 2.6 | 2.7 | 2.8 | 2.9 | 2.10 | 2.11 | 2.12 | 2.13 | 2.14 |
|---|---|---|---|---|---|---|---|---|---|
| High temperature resistant microspheres in the coating | Polyimide | Polyimide | Polyimide | Hybrid polyimide | Polyetherimide | Polyacrylonitrile | P84 | polyester | cellulose |
| Inorganic particles in the coating | Boehmite | Aluminia | magnesium hydroxide | Boehmite | Boehmite | Boehmite | Boehmite | Boehmite | Boehmite |
| 150 °C shrinkage rate (%) | 0.3 | 0.3 | 0.5 | 0.1 | 1.0 | 1.1 | 1.0 | 1.3 | 1.2 |
| Air permeability [s/100mL(1.22k Pa)] | 199 | 191 | 195 | 203 | 194 | 213 | 216 | 220 | 217 |
| Puncture strength (N/μm) | 0.31 | 0.30 | 0.29 | 0.32 | 0.31 | 0.30 | 0.28 | 0.26 | 0.27 |
| Ionic conductivity (mS/cm) | 0.50 | 0.49 | 0.48 | 0.57 | 0.51 | 0.52 | 0.47 | 0.44 | 0.45 |
| Battery capacity retention rate (%) | 99.3 | 99.0 | 98.8 | 99.7 | 99.4 | 99.5 | 98.5 | 98.3 | 98.4 |

Example 2.15

A polyimide hybrid microsphere/barium titanate polyolefin composite separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a polyamic acid solution with a mass concentration of 10%. Nano barium titanate (mass ratio of PAA: titanium dioxide of 95:5) was added thereto, stirred thoroughly. PAA hybrid microspheres were prepared therefrom by electrostatic spraying method. The obtained microspheres were subjected to imidization treatment in a high-temperature furnace. The temperature-raising program was: rising from room temperature to 300 °C at a heating rate of 5 °C/min, maintaining at 300 °C for 1 hour to obtain polyimide/barium titanate microspheres.

Steps (2)-(4) were the same as those in Example 2.6 except that the inorganic particles were changed to barium titanate.

Example 2.16

A polyetherimide microsphere/zinc oxide polyolefin composite separator (CP/PE/CP)

(1) 7.5g polyetherimide was solved in 92.5g N-methylpyrrolidone (NMP), stirred to obtain a polyetherimide solution with a mass concentration of 7.5%. Polyetherimide microspheres were preprared therefrom by electrostatic spraying method.

Steps (2)-(4) were the same as those in Example 2.6.

Example 2.17

A polyacrylonitrile (PAN) microsphere/silica polyolefin composite separator (CP/PE/CP)

(1) 7.5g polyacrylonitrile was solved in 92.5g N-methylpyrrolidone (NMP), stirred to obtain a PAN solution with a mass concentration of 7.5%. Polyacrylonitrile microspheres were preprared therefrom by electrostatic spraying method.

Steps (2)-(4) were the same as those in Example 2.6.

Example 2.18

A P84 microsphere/zirconia polyolefin composite separator (CP/PE/CP)

(1) 7.5g P84 was solved in 92.5g N-methylpyrrolidone (NMP), stirred to obtain a P84 solution with a mass concentration of 7.5%. P84 microspheres were preprared therefrom by blowing spraying method.

Steps (2)-(4) were the same as those in Example 2.6.

Example 2.19

A polyester (polyethylene terephthalate PET) microsphere/kaolin polyolefin composite separator (CP/PE/CP)

(1) 7.5g PET was solved in 92.5g xylenol, stirred to obtain a PET solution with a mass concentration of 7.5%. PET microspheres were prepared therefrom with electrostatic spraying method.

Steps (2)-(4) were the same as those in Example 2.6.

Example 2.20

A polyimide nanosphere-coated polyethylene composite separator
(1) the monomer pyromellitic dianhydride (PMDA) and the monomer 4,4'-diaminodiphenyl ether (ODA) were weighed at a molar ratio of 1:1,and reacted in the solvent N,N-dimethylformamide (DMF) to obtain a polyamic acid solution with a mass concentration of 10%. PAA microspheres were prepared therefrom by electrostatic blowing method. The temperature of the obtained microspheres was raised from room temperature to 300 °C at a heating rate of 5 °C/min, maintaining for 1 hour to obtain polyimide microspheres.

(2) 100g of polyimide microspheres (average particle size of microspheres: 750nm), 1.5g of sodium carboxymethylcellulose, 175g of a mixed solvent of water and ethanol (ethanol 5wt%), 0.3g of a surfactant perfluoroalkyl ether quaternary ammonium salt, 0.3g of a dispersant hydroxypropylmethylcellulose, 0.06g of a wetting agent glycerol were weighed and stirred evenly to obtain a coating slurry.

(3) The stirred coating slurry was put into a vacuum oven for 1 hour for defoaming treatment, and then evenly coated on both sides of a 7 $\mu$m polyethylene separator using microgravure coating method to obtain a coated modified separator.

(4) The coated modified separator was placed in a constant temperature oven to dry. The drying temperature was 55 °C and the drying time was 1 hour. The obtained modified composite polyethylene separator was marked as 7+2P+2P.

Table 7

| Separator specifications | 150 °C shrinkage rate (%) | Air permeability [s/100mL (1.22kPa)] | Porosity (%) | Puncture strength (N/$\mu$m) | Ionic conductivity (mS/cm) | Battery capacity retention rate (%) |
|---|---|---|---|---|---|---|
| 7+2P+2P | 0.6 | 186 | 53.8 | 0.35 | 0.56 | 99.8 |

Experiment series 3

Example 3.1

A polyimide nanofiber/ceramic coated polyethylene separator

(1) The monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a polyamic acid solution with a mass concentration of 6% in the example. PAA nanofibers were prepared with electrospinning method. The obtained fibers were subjected to imidization treatment in a high temperature furnace. The temperature rising program was: rising from room temperature to 300 °C at a heating rate of 5 °C/min, maintaining for 1 hour and obtaining polyimide nanofibers.

(2) 10g of polyimide nanofibers (average diameter of fibers 800nm, aspect ratio in the range of 10-200), 90g of ceramics, 1.5g of a binder sodium carboxymethyl cellulose, 200g of a mixed solvent of water and ethanol (ethanol 5wt%), 0.3g of a surfactant perfluoroalkyl ether quaternary ammonium salt, 0.3g of a dispersant hydroxypropylmethylcellulose, 0.06g of a wetting agent glycerol, 0.3g of a defoaming agent fluorinated alkyl phosphate were weighed; the components were solved and evenly dispered through stirring, to obtain a coating slurry.

(3) the stirred coating slurry was put into a vacuum oven for 1 hour for defoaming treatment, and then evenly coated on respectively one side or both sides of a 7 $\mu$m polyethylene separator using microgravure coating method to obtain coated polyethylene separators, marked as 7+4CP and 7+4CP+4CP; the non-ceramic side of the 7+4$\mu$m single-sided ceramic polyethylene separator was marked as 7+4C+4P. The thickness of the base membrane was 7$\mu$m.

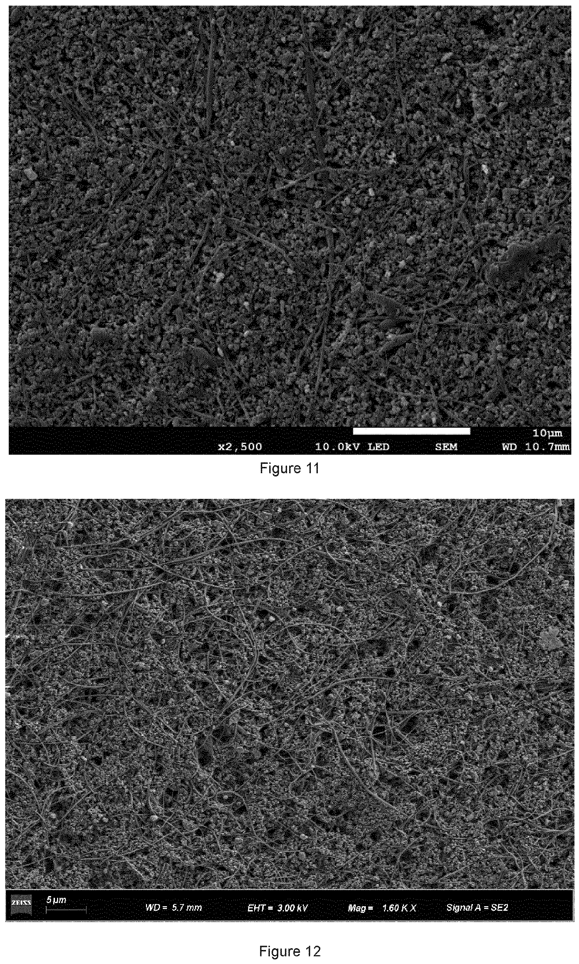

(4) Drying: the coated polyethylene separators were placed in a constant temperature oven to dry. The drying temperature was 60 °C and the drying time was 0.5h. The morphology of the obtained modified composite polyethylene separator is shown in Figure 11.

The above separators were tested for performance respectively, and the results are shown in Table 8 below:

Table 8

| Separator specifications | 150 °C Shrink-age rate (%) | 200 °C Shrinkage rate (%) | Air per- meability [s/ 100mL (1.22kPa)] | Poros- ity (%) | Puncture strength (N/ μm) | 200 °C Tensile strength (MPa) | Ionic conductivity (mS/cm) | Battery capacity retention rate (%) |
|---|---|---|---|---|---|---|---|---|
| 7+4CP | 0.0 | 0.0 | 198 | 50.2 | 0.35 | 30.3 | 0.53 | 98.4 |
| 7+4CP+4CP | 0.0 | 0.0 | 205 | 54.9 | 0.39 | 35.7 | 0.59 | 99.1 |
| 7+4C+4CP | 0.0 | 0.0 | 203 | 52.8 | 0.36 | 32.1 | 0.55 | 98.9 |
| 7+4C | 6.0 | broken | 197 | 47.3 | 0.23 | - | 0.37 | 96.5 |
| 7+4C+4C | 4.3 | broken | 200 | 50.7 | 0.25 | - | 0.41 | 97.3 |

Example 3.2

A polyimide nanofiber/boehmite-coated polypropylene separator

(1) the monomer pyromellitic dianhydride (PMDA) and the monomer 4,4'-diaminodiphenyl ether (ODA) were weighed at a molar ratio of 1:1, added to the solvent N,N-dimethylformamide (DMF) to synthesize and obtain a polyamic acid solution with a mass concentration of 20% in the example. Polyamic acid nanofibers were prepared by blowing electrospinning method. The nanofibers were subjected to imidization treatment in a high temperature furnace. The temperature rising program was: rising from room temperature to 300 °C at a heating rate of 5 °C/min, maintaining for 1 hour to obtain polyimide nanofibers.

(2) 80g of boehmite, 20g of polyimide nanofibers (average diameter of the fibers 200nm, aspect ratio in the range of 10-200), and 6.4g of PVDF were weighed and dispersed in 450g of NMP to obtain a coating slurry.

(3) The stirred coating slurry was put into a vacuum oven for 1 hour for defoaming treatment, and then evenly coated on respectively one side or both sides of a 12 $\mu$m polypropylene separator using microgravure coating method to obtain two types of coated polypropylene separators.

(4) The coated polypropylene separators were placed in a constant temperature oven to dry. The drying temperature was 60 °C and the drying time was 1 hour. The modified composite separators coated on one side and both sides obtained in step (3) were marked as 12+4CP and 12+4CP+4CP respectively. The non-ceramic side of a 12+4$\mu$m single-sided ceramic polypropylene separator was evenly coated with the coating method according to step (3), marked as 12+4C+4CP, which indicates the base membrane thickness of 12$\mu$m, the ceramic coating thickness of 4$\mu$m, and the thickness of the coating obtained from the coating slurry of (2) of 4 $\mu$m.

The morphology of the obtained modified composite polypropylene separator coating is shown in Figure 12.
The above separators were tested for performance respectively, and the results are shown in Table 9 below:

Table 9

| Separator specifications | 150 °C Shrinkage rate (%) | 200 °C Shrinkage rate (%) | Air permeability [s/100mL (1.22kPa)] | Porosity (%) | Puncture strength (N/μm) | 200 °C Tensile strength (MPa) | Ionic conductivity (mS/cm) | Battery capacity reten-tion rate (%) |
|---|---|---|---|---|---|---|---|---|
| 12+4CP+4CP | 0.0 | 0.0 | 211 | 56.0 | 0.42 | 33.0 | 0.48 | 99.2 |
| 12+4C+4CP | 0.0 | 0.0 | 208 | 54.3 | 0.39 | 30.2 | 0.45 | 99.1 |
| 12+4C+4C | 4.3 | broken | 200 | 50.7 | 0.23 | - | 0.40 | 97.3 |

Example 3.3

A hybrid polyimide nanofiber/ceramic coated polyethylene separator

(1) P84 was solved in the solvent N,N-dimethylacetamide (DMAc) to obtain a polyamic acid solution with a mass concentration of 10% in the example. 100nm LATP solid electrolyte was dispersed in the P84 solution to obtain LATP and P84 dispersion. The dispersion was electrospuned to obtain LATP/P84 hybrid nanofibers.

(2) 50g of LATP/P84 hybrid nanofibers (average diameter of the fibers: 300nm, aspect ratio in the range of 20-400), 50g of ceramics, 5.0g of a binder PVDF, 390g of a mixed solvent of water and ethanol (10wt% ethanol), 2.5 g of a surfactant perfluoroalkyl ether quaternary ammonium salt, 2.5g of a dispersant hydroxypropylmethylcellulose, and 0.1g of a wetting agent glycerol were weighed and evenly stirred to obtain a coating slurry.

(3) The stirred coating slurry was put into a vacuum oven for 1 hour for defoaming treatment, and then evenly coated on both sides of a 7 $\mu$m polyethylene separator using extrusion coating method to obtain a coated polyethylene separator.

(4) The coated polyethylene separator was placed in a constant temperature oven to dry. The drying temperature was 60 °C and the drying time was 1 hour. The separator was marked as 7+2CP+2CP.

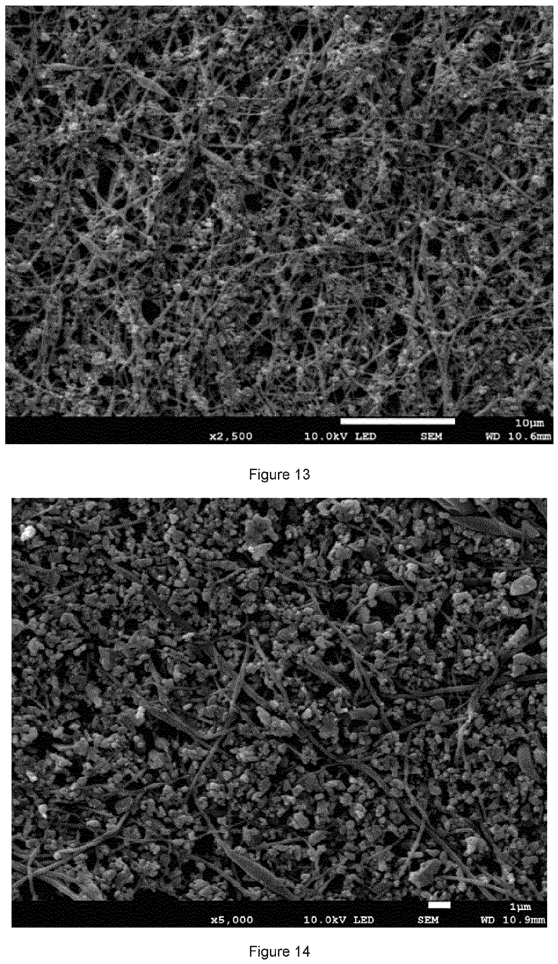

The morphology of the obtained modified composite polyethylene separator coating is shown in Figure 13.

Table 10

| Separator specifications | 150 °C Shrinkage rate (%) | 200 °C Shrinkage rate (%) | Air permeability [s/100mL (1.22kPa)] | Porosity (%) | Puncture strength (N/$\mu$m) | 200 °C Tensile strength (MPa) | Ionic conductivity (mS/cm) | Battery capacity retention rate (%) |
|---|---|---|---|---|---|---|---|---|
| 7+2CP+2CP | 0.0 | 0.0 | 211 | 50.2 | 31.4 | 0.33 | 0.52 | 99.4 |

Example 3.4

A polyacrylonitrile (PAN) nanofiber/magnesium oxide coated polypropylene separator

(1) 8g polyacrylonitrile was dissolved in 92g N-methylpyrrolidone (NMP), and stirred to obtain a PAN solution with a mass concentration of 8% in the example. PAN nanofibers were prepared therefrom by electrospinning method.

(2) 5g of PAN nanofibers (average diameter of the nanofibers: 400nm, aspect ratio in the range of 10-300) and 95g of magnesium oxide were weighed and dispersed in 240g of water, and stirred at high speed to obtain a PAN nanofiber/magnesium oxide dispersion. Then 5.0g of sodium carboxymethyl cellulose was weighed and dissolved in 150g of water to fully dissolve it. The above two slurries were mixed and stirred evenly to obtain a coating slurry.

(3) The stirred coating slurry was put into a vacuum oven for 1 hour for defoaming treatment, and then evenly coated on both sides of a 12 $\mu$m polypropylene separator using microgravure coating method to obtain a coated polypropylene separator.

(4) The coated polypropylene separator was placed in a constant temperature oven to dry. The drying temperature was 60 °C and the drying time was 1 hour. The thickness of the dried coating was 3 $\mu$m and the separator was marked as 12+3CP+3CP.

The morphology of the obtained modified composite polypropylene separator coating is shown in Figure 14.

Table 11

| Separator specifications | 150 °C Shrinkage rate (%) | 200 °C Shrinkage rate (%) | Air permeability [s/100mL (1.22kPa)] | Porosity (%) | Puncture strength (N/$\mu$m) | 200 °C Tensile strength (MPa) | Ionic conductivity (mS/cm) | Battery capacity retention rate (%) |
|---|---|---|---|---|---|---|---|---|
| 12+3CP+3CP | 0.0 | 0.0 | 175 | 49.3 | 0.31 | 21.5 | 0.43 | 98.7 |
| 12+3C+3C | 2.1 | broken | 182 | 45.6 | 0.22 | - | 0.35 | 95.2 |

Example 3.5

A polyimide/silica nanofiber/$Li_7La_3Zr_2O_{12}$ (LLZO) garnet type solid oxide electrolyte coated polyethylene separator

(1) 90g of the monomer pyromellitic dianhydride (PMDA) and the monomer 4,4'-diaminodiphenyl ether (ODA) were weighted in a molar ratio of 1:1, and added to the solvent N,N-dimethylformamide (DMF) to synthesize and obtain a polyamic acid solution with a mass concentration of 12% in the example. 10g TEOS was added and stirred evenly. Polyamic acid nanofibers were prepared therefrom by electrospinning method. The nanofibers were placed in a high-temperature furnace for imidization treatment. The temperature rising program was: rising from room temperature to 300 °C at a heating rate of 5 °C/min, maintaining at 300 °C for 1 hour to obtain polyimide/silica nanofibers, which contain silica on the surface and inside of the fibers.

(2) 1g of polyimide/silica nanofibers (average diameter of the fibers: 350nm, aspect ratio in the range of 15-450), 99g of LLZO, 5g of polyacrylamide, 1.8g of a surfactant perfluoroalkyl ether quaternary ammonium salt, and 0.5g of a dispersant hydroxypropylmethylcellulose, 0.5g of a wetting agent glycerol, and 0.2g of a defoaming agent were solved in 140g of water and sufficiently stirred to dissolve to obtain a coating slurry.

(3) The stirred coating slurry was put into a vacuum oven for 1 hour for defoaming treatment. The slurry was then evenly coated on both sides of a 7 $\mu$m polyethylene separator using microgravure coating method.

(4) The coated polyethylene separator was placed in a constant temperature oven to dry. The drying temperature was 55 °C and the drying time was 0.5 hour.

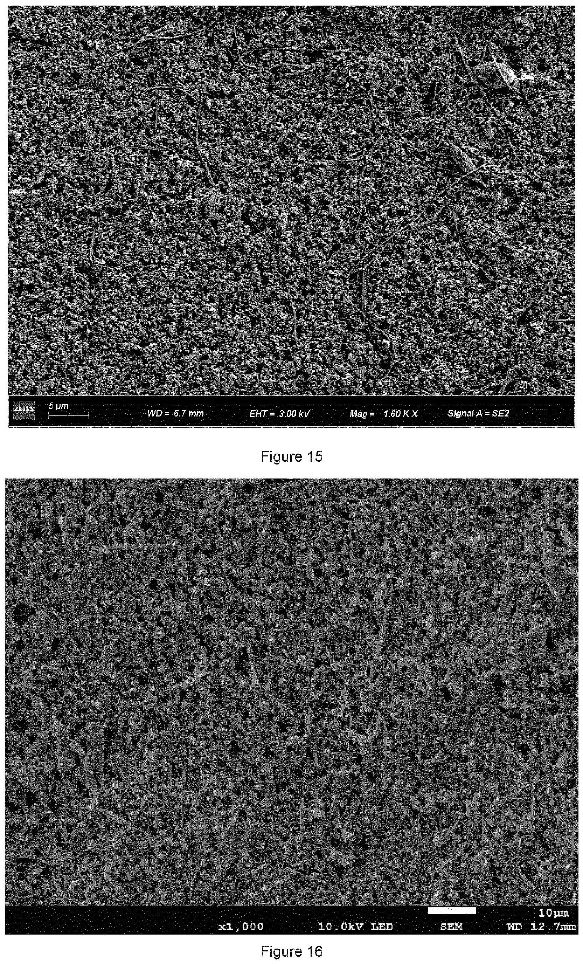

The morphology of the obtained modified composite polyethylene separator is shown in Figure 15.

Table 12

| Separator specifications | 150 °C Shrinkage rate (%) | 200 °C Shrinkage rate (%) | Air permeability [s/100mL (1.22kPa)] | Porosity (%) | Puncture strength (N/μm) | 200 °C Tensile strength (MPa) | Ionic conductivity (mS/cm) | Battery capacity retention rate (%) |
|---|---|---|---|---|---|---|---|---|
| 7+2CP+2CP | 0.0 | 0.0 | 199 | 50.5 | 0.32 | 33.1 | 0.51 | 99.6 |

Example 3.6

A polyimide nanofiber/boehmite coated polyethylene composite separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a polyamic acid solution with a mass concentration of 10% in the example. PAA nanofibers were prepared therefrom by electrospinning method. The temperature of the obtained fibers was raised from room temperature to 300 °C at a heating rate of 5 °C/min, maintaining for 1 hour to obtain polyimide nanofibers.

(2) 20g of polyimide nanofibers (average diameter of the nanofibers: 270nm, aspect ratio in the range of 10-280), 80g of boehmite (average particle size of 500nm), 1.5g of sodium carboxymethylcellulose, 175g of a mixed solvent of water and ethanol (ethanol 5wt%), 0.3g of a surfactant perfluoroalkyl ether quaternary ammonium salt, 0.3g of a dispersant hydroxypropyl methylcellulose, 0.06g of a wetting agent glycerol were weighed and stirred evenly to obtain a coating slurry.

(3) The stirred coating slurry was put into a vacuum oven for 1 hour for defoaming treatment, and then evenly coated on both sides of a 7 $\mu$m polyethylene separator using microgravure coating method to obtain a coated modified separator.

(4) The coated modified separator was placed in a constant temperature oven to dry. The drying temperature was 55 °C and the drying time was 1 hour. The obtained modified composite polyethylene separator was marked as 7+2CP+2CP.

The preparation process of Examples 3.7-3.8 was the same as that of Example 2.6, except that the inorganic particles used in the coating were different.

Example 3.9

A polyvinylidene fluoride (PVDF) nanofiber/boehmite coated polyolefin composite separator

(1) PVDF was dissolved in the solvent N,N-dimethylacetamide (DMAc) to obtain a PVDF solution with a mass concentration of 8% in the example. PVDF nanofibers were prepared therefrom with blowing electrospinning method.

Steps (2)-(4) were the same as those in Example 3.6.

Example 3.10

A polyimide hybrid nanofiber/barium titanate polyolefin composite separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a polyamic acid solution with a mass concentration of 10% in the example. Nano barium titanate (mass ratio of PAA: barium titanate of 95:5) was added thereto, stirred thoroughly. PAA hybrid nanofibers were prepared therefrom by electrospinning method. The obtained nanofibers were subjected to imidization treatment in a high-temperature furnace. The temperature-raising program was: rising from room temperature to 300 °C at a heating rate of 5 °C/min, maintaining at 300 °C for 1 hour to obtain polyimide/barium titanate hybrid nanofibers.

Steps (2)-(4) were the same as those in Example 3.6 except that the inorganic particles were changed to barium titanate.

Example 3.11

A polyetherimide nanofiber/zinc oxide polyolefin composite separator (CP/PE/CP)

(1) 7.5g polyetherimide was solved in 92.5g N-methylpyrrolidone (NMP), stirred to obtain a polyetherimide solution with a mass concentration of 8% in the example. Polyetherimide nanofibers were preprared therefrom by blowing spinning method.

Steps (2)-(4) were the same as those in Example 3.6.

Example 3.12

A polyacrylonitrile (PAN) nanofiber/silica polyolefin composite separator (CP/PE/CP)

(1) 7.5g polyacrylonitrile was solved in 92.5g N-methylpyrrolidone (NMP), stirred to obtain a PAN solution with a mass concentration of 7.5% in the example. Polyacrylonitrile nanofibers were preprared therefrom by blowing spinning method.

Steps (2)-(4) were the same as those in Example 3.6.

Example 3.13

A P84 nanofiber/zirconia polyolefin composite separator (CP/PE/CP) (1) 7.5g P84 was solved in 92.5g N-methylpyrrolidone (NMP), stirred to obtain a P84 solution with a mass concentration of 7.5% in the example. P84 nanofibers were preprared therefrom by blowing spinning method.
Steps (2)-(4) were the same as those in Example 3.6.

Example 3.14

A polyester (polyethylene terephthalate, PET) nanofiber/kaolin polyolefin composite separator (CP/PE/CP) (1) 7.5g PET was solved in 92.5g xylenol, stirred to obtain a PET solution with a mass concentration of 7.5% in the example. PET nanofibers were prepared therefrom with blowing spinning method.
Steps (2)-(4) were the same as those in Example 3.6.

Example 3.15

A hydroxypropylmethylcellulose nanofiber/calcium silicate polyolefin composite separator (CP/PE/CP) (1) 3.5g of cellulose was dissolved in 96.5g of xylenol, stirred to obtain a cellulose solution with a mass concentration of 3.5% in the example. Cellulose nanofibers were prepared therefrom with blowing spinning method.
Steps (2)-(4) were the same as those in Example 3.6.
The test results of test performance of Examples 3.6-3.15 are shown in Table 13.

Table 13

| Example | 3.6 | 3.7 | 3.8 | 3.9 | 3.10 | 3.11 | 3.12 | 3.13 | 3.14 | 3.15 |
|---|---|---|---|---|---|---|---|---|---|---|
| Polymer fibers in the coating | Polyimide | Polyimide | Polyimide | Polyvinylidene fluoride | Hybrid polyimide | Polyetherimide | Polyacrylonitrile | P84 | Polyester | Cellulose |
| Inorganic particles in the coating | Boehmite | Alumina | magnesium hydroxide | Boehmite | Barium titanate | Zinc oxide | Silica | Zirconia | Kaolin | Calcium silicate |
| 150 °C shrinkage rate (%) | 0.0 | 0.0 | 0.0 | 0.0 | 0.0 | 0.0 | 0.0 | 0.0 | 0.0 | 0.0 |
| 200 °C shrinkage rate (%) | 0.0 | 0.0 | 0.0 | 0.0 | 0.0 | 0.0 | 0.2 | 0.4 | 0.0 | 0.0 |
| Air permeability [s/100mL (1.22kPa)] | 193 | 197 | 207 | 208 | 194 | 205 | 201 | 196 | 208 | 197 |
| Puncture strength (N/$\mu$m) | 0.42 | 0.41 | 0.40 | 0.35 | 0.39 | 0.37 | 0.38 | 0.39 | 0.41 | 0.37 |
| Tensile strength (MPa) | 145 | 141 | 137 | 136 | 142 | 137 | 138 | 144 | 148 | 139 |
| 200 °C tensile strength (MPa) | 35.0 | 30.1 | 31.5 | 13.0 | 37.0 | 25.0 | 23.0 | 26.2 | 21.7 | 26.7 |
| Ionic conductivity (mS/cm) | 0.57 | 0.51 | 0.53 | 0.49 | 0.59 | 0.50 | 0.51 | 0.49 | 0.50 | 0.53 |
| Battery capacity retention rate (%) | 99.5 | 99.1 | 99.1 | 97.5 | 99.7 | 99.2 | 99.0 | 98.3 | 98.6 | 98.2 |

Example 3.16

A both-sides coated polyimide nanofiber/boehmite polyolefin composite separator

(1) the monomer pyromellitic dianhydride (PMDA) and the monomer 4,4'-diaminodiphenyl ether (ODA) were weighed at a molar ratio of 1:1, and reacted in the solvent N,N-dimethylformamide (DMF) to obtain a polyamic acid solution with a mass concentration of 10% in the example. PAA nanofibers were prepared therefrom by electrospinning method. The fibers were subjected to imidization treatment in a high temperature furnace. The temperature rising program was: rising from room temperature to 300 °C at a heating rate of 5 °C/min, maintaining for 1 hour and obtaining polyimide nanofibers.

(2) 0.4g of polyimide nanofibers, 99.6g of boehmite(average particle size of 500 nm), 1.5g of sodium carboxymethyl cellulose, 175g of a mixed solvent of water and ethanol (ethanol 5wt%), 0.3g of a surfactant perfluoroalkyl ether quaternary ammonium salt, 0.3g of a dispersant hydroxypropylmethylcellulose, 0.06g of a wetting agent glycerol were weighed and thoroughly stirred to obtain a coating slurry.

(3) The coating slurry was put into a vacuum oven for 1 hour for defoaming treatment, and then evenly coated on both sides of a 9 $\mu$m polyethylene separator using microgravure coating method to obtain a coated modified separator. The thickness of the coating after drying was 2 $\mu$m.

(4) The coated modifed separator was placed in a constant temperature oven to dry. The drying temperature was 55 °C and the drying time was 1 hour. The obtained modified composite separator was marked as 9+2CP+2CP respectively. The thickness of the modified composite polyethylene separator is 13$\mu$m.

The preparation process of Examples 3.17-3.24 and Comparative Example 1 (3.C1) and Comparative Example 2 (3.C2) were the same as those of Example 3.16, except that the amounts of polyimide nanofibers and boehmite were different. The specific compositions and test results are shown in Table 14.

Table 14

| Example | 3.16 | 3.17 | 3.18 | 3.19 | 3.20 | 3.21 | 3.22 | 3.23 | 3.24 | 3.C1 | 3.C2 |
|---|---|---|---|---|---|---|---|---|---|---|---|
| Weight ratio of polymer fibers to inorganic particles in the coating | 0.4: 99.6 | 5:95 | 10: 90 | 20: 80 | 30: 70 | 40: 60 | 50: 50 | 60: 40 | 65: 35 | 0.2: 99.8 | 70: 30 |
| 150 °C shrinkage rate (%) | 0.2 | 0.1 | 0.0 | 0.0 | 0.0 | 0.0 | 0.0 | 0.0 | 0.1 | 0.7 | 0.3 |
| 200 °C shrinkage rate (%) | 1.3 | 0.5 | 0.0 | 0.0 | 0.0 | 0.0 | 0.0 | 0.1 | 0.5 | 5.8 | 2.3 |
| Air permeability [s/100mL(1.22kP a)] | 209 | 205 | 201 | 195 | 197 | 195 | 191 | 189 | 186 | 218 | 248 |
| Tensile strength (MPa) | 126 | 129 | 135 | 145 | 149 | 147 | 146 | 148 | 143 | 121 | 132 |
| 200 °C tensile strength (MPa) | 10.0 | 18.1 | 27.3 | 35.0 | 35.6 | 36.0 | 36.3 | 37.5 | 37.5 | 0 | 30.0 |
| Puncture strength (N/$\mu$m) | 0.31 | 0.33 | 0.34 | 0.37 | 0.45 | 0.40 | 0.38 | 0.36 | 0.35 | 0.27 | 0.30 |
| Ionic conductivity (mS/cm) | 0.45 | 0.56 | 0.58 | 0.61 | 0.63 | 0.62 | 0.60 | 0.61 | 0.59 | 0.36 | 0.39 |
| Battery capacity retention rate (%) | 98.6 | 98.7 | 99.3 | 99.5 | 99.6 | 99.4 | 99.4 | 98.3 | 98.1 | 96.5 | 97.3 |

Example 4.1

A both-sides coated polyimide nanofiber/boehmite polyolefin composite separator
(1) The monomer pyromellitic dianhydride (PMDA) and the monomer 4,4'-diaminodiphenyl ether (ODA) were weighed at a molar ratio of 1:1, reacted in the solvent N,N-dimethylformamide (DMF) to obtain a polyamic acid solution with a mass concentration of 10% in the example. PAA nanofibers were prepared therefrom by electrospinning method. The fibers were subjected to imidization treatment in a high temperature furnace. The temperature rising program was: rising from room temperature to 300 °C at a heating rate of 5 °C/min, maintaining for 1 hour to obtain polyimide nanofibers.

(2) The monomer pyromellitic dianhydride (PMDA) and the monomer 4,4'-diaminodiphenyl ether (ODA) were weighed at a molar ratio of 1:1, reacted in the solvent N,N-dimethylformamide (DMF) to obtain a clear and transparent polyamic acid solution with a mass concentration of 10%. PAA microspheres were prepared therefrom by electrostatic blowing method. The temperature of the obtained microspheres was raised from room temperature to 300 °C at a heating rate of 5 °C/min, maintaining for 1 hour and obtaining polyimide microspheres.

(3) 35g of polyimide microspheres (average particle size of the microspheres: 750nm), 5.4g of polyimide nanofibers, 59.6g of silica (average particle size of 500nm), 1.5g of sodium carboxymethyl cellulose, 175g of a mixed solvent of water and ethanol (ethanol 5wt%), 0.3g of a surfactant perfluoroalkyl ether quaternary ammonium salt, 0.3g of a dispersant hydroxypropylmethylcellulose, 0.06g of a wetting agent glycerol were weighed and evenly stirred to obtain a coating slurry.

(4) The coating slurry was put into a vacuum oven for 1 hour for defoaming treatment, and then evenly coated on both sides of a 7 μm polyethylene separator using microgravure coating method to obtain a coated modified separator. The thickness of the coating after drying was 2 μm.

(5) The coated modifed separator was placed in a constant temperature oven to dry. The drying temperature was 55 °C and the drying time was 1 hour. The obtained modified composite polyethylene separator was marked as 7+2CP+2CP. The thickness of the modified composite polyethylene separator is 11μm. The performance test results are shown in Table 15.

Table 15

| Separator specifications | 150 °C Shrinkage rate (%) | 200 °C Shrinkage rate (%) | Air permeability [s/100mL (1.22kPa)] | Po- ros- ity (%) | Puncture strength (N/μm) | 200 °C Tensile strength (MPa) | Ionic conductivity (mS/cm) | Battery capacity retention rate (%) |
|---|---|---|---|---|---|---|---|---|
| 7+2CP+2CP | 0.10% | 0.15% | 195 | 52.5 | 0.31 | 29.8 | 0.58 | 99.7 |

**Claims**

1. A coated modified composite separator, **characterized in that**,

   the coated modified composite separator includes a base membrane and a coating,
   the coating is coated on either any one side or both sides of the base membrane,
   the coating comprises at least two of:

   b2.1 high temperature resistant polymer microspheres,
   b2.2 high temperature resistant polymer nanofibers, and
   b2.3 inorganic particles.

2. The coated modified composite separator according to claim 1, **characterized in that** the high temperature resistant polymer includes polyimide, wherein the coating preferably comprises polyimide nanofibers/poyimide microspheres.

3. The coated modified composite separator according to claim 1, **characterized in that** the particle size of the high temperature resistant polymer microspheres is 3-5000 nm, preferably 5-3000 nm, more preferably 8-2000 nm, and/or

   the diameter of the high temperature resistant polymer nanofibers is 5-1500 nm, preferably 6-1450 nm, more preferably 8-1350 nm; and/or
   the length of the high temperature resistant polymer nanofibers is 0.5-1000 $\mu$m, preferably 0.6-950 $\mu$m, more preferably 1.0-900 $\mu$m; and/or the average particle size of the inorganic particles is 3 nm-5 $\mu$m, preferably 7 nm-4.9 $\mu$m, most preferably 10 nm-4.5$\mu$m; and/or
   the thickness of the base membrane is 1.5-40 $\mu$m, preferably 2.0-35 $\mu$m, more preferably 3.5-30 $\mu$m; and/or,
   the total thickness of the coated modified composite separator is 2.0-45 $\mu$m, preferably 2.5-40 $\mu$m, and most preferably 3-36 $\mu$m; and/or
   the thickness of the coating is 0.2-10 $\mu$m, preferably 0.3-9 $\mu$m, more preferably 0.5-8 $\mu$m.

4. The coated modified composite separator according to claim 1 or 2, **characterized in that** the base membrane is a polymer base membrane or a polymer base membrane coated with inorganic particles,
   the polymer base membrane preferably includes at least one of polyolefin base membrane, cellulose base membrane, polyester base membrane, aramid fiber base membrane, polyimide base membrane, and organic-inorganic hybrid base membrane.

5. The coated modified composite separator according to claim 1, **characterized in that** the coating comprises high temperature resistant polymer microspheres and inorganic particles, and
   the weight ratio of the high temperature resistant polymer microspheres to the inorganic particles is 0.1-99.9:99.9-0.1, preferably 1-99.9:99-0.1, more preferably 5-99.9:95-0.1, most preferably 30-99.9:70-0.1.

6. The coated modified composite separator according to claim 1, **characterized in that** the polymer base membrane includes a single layer film, a double layer film or a multi-layer film, and the polymer base membrane contained in each layer are the same or different.

7. The coated modified composite separator according to any one of claims 5 or 6, **characterized in that** the high temperature resistant polymer microspheres include at least one of the following: unmodified high temperature resistant polymer microspheres, surface modified high temperature resistant polymer microspheres, and inorganic hybrid high temperature resistant polymer microspheres, Preferably, wherein the polymers in the unmodified high temperature resistant polymer microspheres, surface modified high temperature resistant polymer microspheres, and inorganic hybrid high temperature resistant polymer microspheres include: at least one of P84, polyetherimide, polyphosphazene, polyacrylonitrile, polystyrene, polyvinylidene fluoride, polyvinylidene fluoride copolymers, polyvinylidene fluoride-hexafluoropropylene, polymethyl methacrylate, polytetrafluoroethylene, polyimide, polyester, cellulose, polyether ether ketone, polyaryl ether, polyamide, and polybenzimidazole,

   preferably, the surface modified high temperature resistant polymer microspheres include at least one of inorganic surface-modified high temperature resistant polymer microspheres, high temperature resistant polymer microspheres with polar groups after surface treating, or high temperature resistant polymer microspheres surface-coated with a functionalized polymer layer containing polar groups,
   preferably, the inorganic hybrid high temperature resistant polymer microspheres include at least one of polyimide/silica microspheres, polyimide/titanium dioxide microspheres, polyimide/zirconia microspheres, polyimide/zinc oxide microspheres, polyimide/magnesium oxide microspheres, polyimide/magnesium hydroxide microspheres, polyimide/alumina microspheres, polyimide/boehmite microspheres, polyimide/cerium oxide microspheres, polyimide/scandium oxide microspheres, polyimide/vanadium pentoxide microspheres.

8. The coated modified composite separator according to claim 1, **characterized in that** the coating comprises high temperature resistant polymer nanofibers and inorganic particles, and the weight ratio of the high temperature resistant polymer nanofibers to inorganic particles is (0.4-65):(99.6-35), preferably (1-64):(99-36), more preferably (3-62):(97-38), most preferably (5-59):(95-41).

9. The coated modified composite separator according to claim 8, wherein the high temperature resistant polymer nanofibers include at least one of the following: unmodified high temperature resistant polymer nanofibers, surface modified high temperature resistant polymer nanofibers, and inorganic hybrid high temperature resistant polymer nanofibers,

   preferably, the unmodified high temperature resistant polymer nanofibers and the high temperature-resistant polymer nanofibers used for surface modification and inorganic hybridization include at least one of : P84 nanofibers, polyetherimide nanofibers, polyvinylidene fluoride and its copolymer nanofibers, polyvinylidene fluoride-hexafluoropropylene nanofibers, polytetrafluoroethylene nanofibers, polyphosphazene nanofibers, polyacrylonitrile nanofibers, polyimide nanofibers, polyester nanofibers, cellulose nanofibers, polyether ether ketone nanofibers, polyaryl ether nanofibers, polyamide nanofibers, and polybenzimidazole nanofibers, wherein, preferably the surface modified high temperature resistant polymer nanofibers include at least one of inorganic substance surface-modified high temperature resistant polymer nanofibers, high temperature resistant polymer nanofibers with polar groups after surface treating, or high temperature resistant polymer nanofibers surface-coated with a functionalized polymer layer containing polar groups.

10. The coated modified composite separator according to any one of claims 5 to 9, **characterized in that** the inorganic particles in the coating include at least one of ceramics, metal oxides, metal hydroxides, metal carbonates, silicates, kaolin, talc, minerals, and glass; preferably at least one of boehmite, alumina, silica, barium titanate, titanium dioxide, zinc oxide, magnesium oxide, magnesium hydroxide, zirconia or an oxide solid electrolyte;

    preferably, the oxide solid electrolyte includes at least one of perovskite type, NASICON type, LISICON type, garnet type and LiPON type electrolyte;
    preferably, the average particle size of the inorganic particles is 10 nm-5 $\mu$m, preferably 11 nm-4.9 $\mu$m, and most preferably 15 nm-4.5 $\mu$m.

11. The coated modified composite separator according to any one of claims 5 to 10, wherein the coating further comprises at least one of a binder, a surfactant, a dispersant, a wetting agent, and a defoaming agent,

    preferably, the amount of the binder is 0.3-10.5 parts by weight, preferably 0.5-12.5 parts by weight, more preferably 0.6-12 parts by weight, more preferably 1.0-9 parts by weight; and/or
    the amount of the surfactant is 0.05-7 parts by weight, preferably 0.1-5 parts by weight, more preferably 0.2-4.9 parts by weight, more preferably 0.4-4.7 parts by weight; and/or
    the amount of the dispersant is 0.05-9 parts by weight, preferably 0.1-7 parts by weight, more preferably 0.2-6.9 parts by weight, more preferably 0.4-6.4 parts by weight; and/or
    the amount of the wetting agent is 0.02-7 parts by weight, preferably 0.05-5 parts by weight, more preferably 0.06-4.9 parts by weight, more preferably 0.09-4.7 parts by weight; and/or
    the amount of the defoaming agent is 0.04-4 parts by weight, preferably 0.1-4 parts by weight, more preferably 0.2-3.9 parts by weight, more preferably 0.4-3.5 parts by weight.

12. A preparation method of the coated modified composite separator according to any one of claims 1 to 11, **characterized in that** it includes the following steps:

    (1) formulating a coating slurry, which comprises at least two of the following:

       b2.1 high temperature resistant polymer microspheres,
       b2.2 high temperature resistant polymer nanofibers, and
       b2.3 inorganic particles;

(2) coating the coating slurry on either one side or both sides of a base membrane.

13. The preparation method according to claim 12, wherein the coating slurry additionally contains a slurry solvent, and the slurry solvent is one of a water type solvent or an organic solvent,

preferably, the water type solvent includes pure water or a mixed solution of pure water and at least one of ethanol, ethylene glycol, glycerol, isopropyl alcohol, propylene glycol, butanol, and acetic acid;
preferably, the organic solvent includes at least one of N,N-dimethylformamide, N,N-dimethylacetamide, N-methylpyrrolidone, dimethyl sulfoxide, acetone, ethanol, isopropanol, ethylene carbonate, and dimethyl carbonate.

14. The preparation method according to any one of claims 12-13, **characterized in that** the coating method of the coating includes at least one of electrostatic spraying, blade coating, rotating spraying, extrusion coating, transfer coating, dip coating, wire rod coating, gravure or micro-gravure coating.

15. The preparation method according to claim 12, the coating slurry comprises high temperature resistant polymer microspheres and high temperature resistant polymer nanofibers, wherein the high temperature resistant polymer is polyimide, the method includes the following steps:

A: preparing a polyamic acid solution by low-temperature condensation polymerization in a polar aprotic solvent using a dianhydride and a diamine as monomers, with intrinsic viscosity being controlled at 0.01-1dL/g; and preparing a polyamic acid material with nanofiber/microsphere composite morphology by using template method, spray drying technology, electrospinning technology, blowing spinning technology or blowing-assisted electrospinning, adjusting spinning parameters when necessary;
B: subjecting the polyamic acid material prepared in step A to high-temperature heating treatment, and thermally imidizing the polyamic acid material into a polyimide material;
C: formulating a coating slurry: dispersing the polyimide material prepared in step B into a dispersion liquid, and stirring evenly; adding a binder into the polyimide dispersion liquid and stirring evenly, with a stirring rate of 500-30000rpm;
D: applying evenly the coating slurry obtained in step C on the surface of the base membrane;
E: drying the composite separator obtained through the treatment of step D, wherein the drying temperature is 50-100°C, and the drying time is 0.1min-12h.

16. The preparation method according to claim 15, **characterized in that**, for the polyamic acid solution used in step A, the dianhydride is one or a mixture of two or more of: pyromellitic dianhydride (PMDA), 3,3',4,4'-biphenyltetracarboxylic dianhydride (BPDA), 2,3,3',4'-biphenyltetracarboxylic dianhydride ($\alpha$-BPDA), 4,4'-diphenyl ether dianhydride (ODPA), 3,3',4,4'-benzophenone tetracarboxylic acid dianhydride (BTDA), hexafluorodianhydride (6FDA), bisphenol A diether dianhydride (BPADA), 3,3,4,4-diphenyl sulfone tetracarboxylic dianhydrides (DSDA), the diamine is one or a mixture of two or more of: 4,4'-diaminodiphenyl ether (ODA), p-phenylenediamine (p-PDA), 3,4-diaminodiphenylmethane (3,4'-MDA), 4,4'-diaminodiphenylmethane (4,4'-MDA), 2,2'-bis(trifluoromethyl)-4,4'-diaminobiphenyl (TFMB), 1,3-bis(4-aminophenoxy)benzene (1,3,4-APB), 2,2'-bis(trifluoromethyl) -4,4'-diaminophenyl ether (6FODA), 2,2-bis(3-amino-4-hydroxyphenyl)hexafluoropropane (6FAP), 2,2-bis[4-(4-aminophenoxy)phenyl]propane (BAPP); or is prepared by blending at least two polyamic acid solutions; the solid content of the polyamic acid solution is 5-40wt%; and/or

the thermal imidization process used in step B has a maximum temperature of 250-450°C and a residence time of 0.1-30min, and/or
the binder in step C is one or more of an aqueous PVDF emulsion, polyvinyl alcohol, polyethylene oxide, an acrylic water-soluble glue, styrene-butadiene rubber, sodium carboxymethylcellulose and polyvinylpyrrolidone;
the weight parts of each component of the coating slurry are as following: 1-3 parts of binder, 89-52 parts of solvent, and 10-45 parts of polyimide; the dispersion liquid is water, and/or
in step D, the polyolefin separator is coated with polyimide on one side or both sides, and the coating method is one of electrostatic spraying, blade coating, extrusion coating, wire rod coating, transfer coating, dip coating, gravure or micro-gravure coating.

17. The preparation method according to claim 12, the coating slurry comprises high temperature resistant polymer microspheres or high temperature resistant polymer microspheres and inorganic particles, **characterized in that** the preparation method includes the following steps:

(1) formulating a mixed coating slurry containing high temperature resistant polymer microspheres or high temperature resistant polymer microspheres and inorganic particles;
(2) coating the coating slurry on either any one side or both sides of the base membrane.

18. The preparation method according to claim 17, **characterized in that** the solid content of the coating slurry is 2-71.4wt%, preferably 4-70wt%, and more preferably 10-62wt%;
the viscosity of the coating slurry is 20-7000cP, preferably 100-6000cP, more preferably 150-5500cP.

19. The preparation method according to claim 12, **characterized in that** the coating slurry comprises high temperature resistant polymer nanofibers and inorganic particles, and the method includes the following steps:

(1) formulating a coating slurry containing high temperature resistant polymer nanofibers and inorganic particles;
(2) coating the coating slurry on either any one side or both sides of the base membrane.

20. The preparation method according to claim 19, wherein the coating slurry comprises the following components in parts by weight: 0.4-65 parts of high temperature resistant polymer nanofibers, 35-99.6 parts of inorganic particles, 100-5000 parts of slurry solvent; the sum of the weight parts of high temperature resistant polymer nanofibers and inorganic particles is 100.

21. The preparation method according to any one of claims 19 or 20, wherein the solid content of the coating slurry is 2-50wt%, preferably 6-48wt%, more preferably 10-43wt%; and/or
the viscosity of the coating slurry is 50-4000cP, preferably 100-3500cP, and more preferably 200-3000cP.

22. The preparation method according to any one of claims 12 to 21, the coating slurry further comprises an additive selected from at least one of a binder, a surfactant, a dispersant, a wetting agent, a defoaming agent, wherein preferably the amount of slurry solvent is 100-5000 parts by weight, preferably 120-4000 parts by weight, and most preferably 150-2900 parts by weight; and /or

the amount of the binder is 0.5-12.5 parts by weight, preferably 0.6-12 parts by weight, more preferably 1.0-9 parts by weight; and/or the amount of the surfactant is 0.1-5 parts by weight, preferably 0.2-4.9 parts by weight, more preferably 0.4-4.7 parts by weight; and/or
the amount of the dispersant is 0.1-7 parts by weight, preferably 0.2-6.9 parts by weight, more preferably 0.4-6.4 parts by weight; and/or
the amount of the wetting agent is 0.05-5 parts by weight, preferably 0.06-4.9 parts by weight, more preferably 0.09-4.7 parts by weight; and/or
the amount of the defoaming agent is 0.1-4 parts by weight, preferably 0.2-3.9 parts by weight, and more preferably 0.4-3.5 parts by weight.

23. A coating slurry, comprising a slurry solvent and at least two of the following:

b2.1 high temperature resistant polymer microspheres,
b2.2 high temperature resistant polymer nanofibers, and
b2.3 inorganic particles.

24. The coating slurry according to claim 23, **characterized in that** it contains high temperature resistant polymer nanofibers, inorganic particles and a slurry solvent, wherein it contains 0.4-65 parts by weight of the high temperature resistant polymer nanofibers and 35-99.6 parts by weight of the inorganic particles, and the sum of the weight parts of high temperature resistant polymer nanofibers and inorganic particles is 100.

25. The coating slurry according to claim 23, **characterized in that** it contains high temperature resistant polymer microspheres, inorganic particles and a slurry solvent, wherein the weight ratio of the high temperature resistant polymer microspheres to the inorganic particles is 0.1-99.9 :99.9-0.1, preferably 1-99.9:99-0.1, more preferably 5-99.9:95-0.1, most preferably 30-99.9:70-0.1.

26. The coating slurry according to claim 23, **characterized in that** it contains high temperature resistant polymer nanofibers, high temperature resistant polymer microspheres and a slurry solvent, wherein the high temperature resistant polymer is polyimide, and the weight parts of each component of the coating slurry are: 1-3 parts of binder, 89-52 parts of solvent, and 10-45 parts of polyimide.

27. The coating slurry according to any one of claims 23 to 26, wherein the solid content of the coating slurry is 2-50wt%, preferably 6-48wt%, more preferably 10-43wt%; and/or
the viscosity of the coating slurry is 50-4000cP, preferably 100-3500cP, and more preferably 200-3000cP.

28. The coating slurry according to any one of claims 23 to 27, wherein the slurry solvent is one of a water type solvent or an organic solvent,

preferably, the water type solvent includes pure water or a mixed solution of water and at least one of ethanol, ethylene glycol, glycerol, isopropyl alcohol, and butanol;
preferably, the organic solvent includes at least one of N,N-dimethylformamide, N,N-dimethylacetamide, N-methylpyrrolidone, dimethyl sulfoxide, acetone, ethanol, isopropanol, ethylene carbonate, and dimethyl carbonate.

29. The coating slurry according to any one of claims 23 to 28, wherein the coating slurry further comprises an additive selected from at least one of a binder, a surfactant, a dispersant, a wetting agent, and a defoaming agent, wherein

the amount of slurry solvent is 100-5000 parts by weight, preferably 120-4000 parts by weight, and most preferably 150-2900 parts by weight; and/or
the amount of the binder is 0.5-12.5 parts by weight, preferably 0.6-12 parts by weight, more preferably 1.0-9 parts by weight; and/or the amount of the surfactant is 0.1-5 parts by weight, preferably 0.2-4.9 parts by weight, more preferably 0.4-4.7 parts by weight; and/or
the amojnt of the dispersant is 0.1-7 parts by weight, preferably 0.2-6.9 parts by weight, more preferably 0.4-6.4 parts by weight; and/or
the amount of the wetting agent is 0.05-5 parts by weight, preferably 0.06-4.9 parts by weight, more preferably 0.09-4.7 parts by weight; and/or
the amount of the defoaming agent is 0.1-4 parts by weight, preferably 0.2-3.9 parts by weight, and more preferably 0.4-3.5 parts by weight.

30. A lithium ion battery, **characterized in that** the lithium ion battery includes a positive electrode, a negative electrode, an electrolyte and a separator, wherein the separator is the coated modified composite separator according to any one of claims 1-11 or the coated modified composite separator prepared by the method according to any one of claims 12-22.

31. A coated modified composite separator, **characterized in that**,

the coated modified composite separator includes a base membrane and a coating,
the coating is coated on either any one side or both sides of the base membrane,
the coating comprises:

b2.1 high temperature resistant polymer microspheres,
b2.2 high temperature resistant polymer nanofibers, and
b2.3 inorganic particles.

32. A preparation method of the coated modified composite separator according to claim 31, **characterized in that** it includes the following steps:

(1) formulating a coating slurry containing:

b2.1 high temperature resistant polymer microspheres,
b2.2 high temperature resistant polymer nanofibers, and
b2.3 inorganic particles;

(2) coating either any one side or both sides of the base membrane by the coating slurry.

33. A coating slurry, comprising a slurry solvent and:

b2.1 high temperature resistant polymer microspheres,
b2.2 high temperature resistant polymer nanofibers, and

b2.3 inorganic particles.

Figure 1

Figure 2

Figure 3

Figure 4

x5,000     10.0kV LED     1µm   JEOL
                          SEM    WD 9.7mm

Figure 5

x2,000     5.0kV  LED     10µm
                          SEM    WD 8.0mm   12:01:21

Figure 6

Figure 7

Figure 8

Figure 9

Figure 10

Figure 11

Figure 12

Figure 13

Figure 14

ZEISS 5 µm WD = 6.7 mm EHT = 3.00 kV Mag = 1.60 K X Signal A = SE2

Figure 15

x1,000 10.0kV LED SEM WD 12.7mm 10µm

Figure 16

<table>
<tr><td colspan="2" align="center">**INTERNATIONAL SEARCH REPORT**</td><td>International application No.<br>**PCT/CN2022/126445**</td></tr>
</table>

**A.    CLASSIFICATION OF SUBJECT MATTER**

H01M 50/409(2021.01)i;  H01M 50/446(2021.01)i;  C08J 7/04(2020.01)i;  C08L 23/06(2006.01)i

According to International Patent Classification (IPC) or to both national classification and IPC

**B.    FIELDS SEARCHED**

Minimum documentation searched (classification system followed by classification symbols)

H01M; C08J; C08L

Documentation searched other than minimum documentation to the extent that such documents are included in the fields searched

Electronic data base consulted during the international search (name of data base and, where practicable, search terms used)

CNABS; CNTXT; ENTXTC; ENTXT; VEN; 万方, WANFANG; CNKI; Web of Science: 聚酰亚胺, 涂层, 微球, 耐高温, 隔膜, 纤维, 电池, 无机颗粒, 耐热, 膜, polyimide, diaphragm, fiber, coat, microsphere, battery, inorganic particle, high temperature resistant, membrane

**C.    DOCUMENTS CONSIDERED TO BE RELEVANT**

| Category* | Citation of document, with indication, where appropriate, of the relevant passages | Relevant to claim No. |
|---|---|---|
| PX | CN 114497899 A (BEIJING YUANWEI TECHNOLOGY CO. LTD.) 13 May 2022 (2022-05-13)<br>      claims 1-16, and embodiments 1-15 | 1-8, 10-14, 17-18, 22-23, 25, 27-30 |
| PX | CN 113969006 A (BEIJING YUANWEI TECHNOLOGY CO. LTD.) 25 January 2022 (2022-01-25)<br>      claims 1-9, and embodiments 1-3 | 1-4, 6-7, 9, 11-16, 22-23, 26-30 |
| PX | CN 114361717 A (ZHUHAI COSMX BATTERY CO., LTD.) 15 April 2022 (2022-04-15)<br>      embodiments 1-5, and comparative embodiments 1-3 | 1, 3-8, 10-14, 17-18, 22-23, 25, 27-30 |
| X | CN 111682149 A (HUIZHOU LIWEI ELECTRONIC TECHNOLOGY CO., LTD) 18 September 2020 (2020-09-18)<br>      claims 1-10, description, paragraphs 6-23, and embodiments 11-15 | 1-8, 10-14, 17-18, 22-23, 25, 27-30 |
| Y | CN 111682149 A (HUIZHOU LIWEI ELECTRONIC TECHNOLOGY CO., LTD) 18 September 2020 (2020-09-18)<br>      claims 1-10, description, paragraphs 6-23, and embodiments 11-15 | 31-33 |
| X | JP 2010146839 A (TEIJIN LTD.) 01 July 2010 (2010-07-01)<br>      claims 1-8, and embodiments 1-2 | 1-8, 10-14, 17-18, 22-23, 25, 27-30 |

☑ Further documents are listed in the continuation of Box C.          ☑ See patent family annex.

| | |
|---|---|
| *     Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 December 2022** | **09 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/126445** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111326697 A (FIELD MOUTH INTELLIGENCE AND THE LIKE) 23 June 2020 (2020-06-23)<br>    claims 1-10, and embodiment 1 | 1, 3-4, 9-14, 19-24, 27-30 |
| X | CN 107342387 A (WINNERWAY MOTORS CO., LTD.) 10 November 2017 (2017-11-10)<br>    description, paragraphs 18-40, and embodiments 1-7 | 1, 3-4, 9-14, 19-24, 27-30 |
| X | CN 106299213 A (INSTITUTE OF METAL RESEARCH, CHINESE ACADEMY OF SCIENCES) 04 January 2017 (2017-01-04)<br>    description, paragraphs 7-13 and 22-26, and embodiments 1-5 | 23-29, 33 |
| Y | CN 106299213 A (INSTITUTE OF METAL RESEARCH, CHINESE ACADEMY OF SCIENCES) 04 January 2017 (2017-01-04)<br>    description, paragraphs 7-13 and 22-26, and embodiments 1-5 | 31-33 |
| A | CN 109167013 A (SHENZHEN SENIOR TECHNOLOGY MATERIAL CO., LTD.) 08 January 2019 (2019-01-08)<br>    claims 1-10 | 1-33 |
| A | WO 2021189459 A1 (NINGDE AMPEREX TECHNOLOGY LTD.) 30 September 2021 (2021-09-30)<br>    description, paragraphs 6-18 | 1-33 |

Form PCT/ISA/210 (second sheet) (January 2015)

56

**INTERNATIONAL SEARCH REPORT**
**Information on patent family members**

| | | | | |
|---|---|---|---|---|
| International application No. | | | | |
| **PCT/CN2022/126445** | | | | |

| Patent document cited in search report | | | Publication date (day/month/year) | Patent family member(s) | Publication date (day/month/year) |
|---|---|---|---|---|---|
| CN | 114497899 | A | 13 May 2022 | None | |
| CN | 113969006 | A | 25 January 2022 | None | |
| CN | 114361717 | A | 15 April 2022 | None | |
| CN | 111682149 | A | 18 September 2020 | None | |
| JP | 2010146839 | A | 01 July 2010 | None | |
| CN | 111326697 | A | 23 June 2020 | None | |
| CN | 107342387 | A | 10 November 2017 | None | |
| CN | 106299213 | A | 04 January 2017 | None | |
| CN | 109167013 | A | 08 January 2019 | None | |
| WO | 2021189459 | A1 | 30 September 2021 | KR 20220151707 A | 15 November 2022 |

Form PCT/ISA/210 (patent family annex) (January 2015)

**REFERENCES CITED IN THE DESCRIPTION**

**Patent documents cited in the description**

- CN 104993089